(19) **Europäisches Patentamt European Patent Office Office européen des brevets**

(11) **EP 4 738 972 A1**

(12) **EUROPEAN PATENT APPLICATION**
published in accordance with Art. 153(4) EPC

(43) Date of publication:
**06.05.2026 Bulletin 2026/19**

(21) Application number: **24853574.2**

(22) Date of filing: **01.08.2024**

(51) International Patent Classification (IPC):
*H04W 74/08* (2024.01)

(52) Cooperative Patent Classification (CPC):
**H04L 69/06; H04W 74/08; H04W 74/0833**

(86) International application number:
**PCT/CN2024/109190**

(87) International publication number:
**WO 2025/036162 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311019103**
**31.10.2023 CN 202311442764**

(71) Applicant: **Huawei Technologies Co., Ltd.**
**Shenzhen, Guangdong 518129 (CN)**

(72) Inventor: **FAN, Bo**
**Shenzhen, Guangdong 518129 (CN)**

(74) Representative: **Isarpatent**
**Patent- und Rechtsanwälte PartG mbB**
**Friedrichstraße 31**
**80801 München (DE)**

(54) **COMMUNICATION METHOD AND APPARATUS**

(57) Embodiments of this application provide a communication method and apparatus, to implement compatibility between a function of cell switching triggered by lower layer signaling and a function of inter-cell multi-station transmission. The method includes: A terminal device receives indication information from a network device, where the indication information is for triggering a random access procedure; and if the network device configures first configuration information and second configuration information for the terminal device, the downlink control information includes a first field and a second field. The terminal device determines, based on a combination of the first field and the second field, information corresponding to the random access procedure.

FIG. 6

**Description**

CROSS-REFERENCE TO RELATED APPLICATIONS

This application claims priorities to Chinese Patent Application No. 202311019103.8, filed with the China National Intellectual Property Administration on August 11, 2023 and entitled "COMMUNICATION METHOD AND APPARATUS", and to Chinese Patent Application No. 202311442764.1, filed with the China National Intellectual Property Administration on October 31, 2023 and entitled "COMMUNICATION METHOD AND APPARATUS", both of which are incorporated by reference in their entireties.

TECHNICAL FIELD

This application relates to the field of communication technologies, and in particular, to a communication method and apparatus.

BACKGROUND

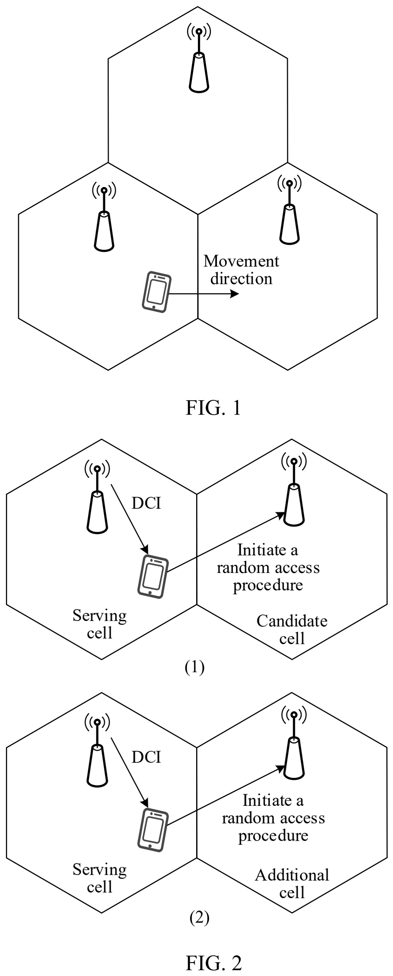

In a communication system, there are a plurality of network devices (for example, base stations) on a network side, each network device may cover an area, and the area may be referred to as a cell. A terminal device may move from one cell to another cell, that is, move from coverage of one network device to coverage of another network device. This process is referred to as cell switching, as shown in FIG. 1. After the terminal device switches to the another cell, the network device needs to indicate the terminal device to initiate a random access procedure to the cell, so that the terminal device obtains uplink timing information, for example, a timing advance (timing advance, TA), of the cell. In this way, terminal device is able to perform uplink transmission in the cell.

Currently, a communication protocol proposes a function of cell switching triggered by lower layer signaling, to implement fast cell switching. In the function of cell switching triggered by lower layer signaling, the network device may configure at least one candidate cell for the terminal device. When the terminal device moves to an edge of a current serving cell, and approaches a candidate cell, the network device may send downlink control information (downlink control information, DCI) to the terminal device in advance, where a field in the DCI indicates the candidate cell, to indicate, in advance, the terminal device to initiate a random access procedure to the candidate cell, so that the terminal device obtains a timing advance of the candidate cell in advance, as shown in (1) in FIG. 2. In addition, the communication protocol further proposes a function of inter-cell multi-station transmission, so that the terminal device performs multi-station transmission by using a serving cell and at least one additional cell corresponding to the serving cell. In the function of inter-cell multi-station transmission, the network device may configure at least one additional cell for the terminal device, and send DCI to the terminal device, where a field in the DCI indicates an additional cell, to indicate the terminal device to initiate a random access procedure to the additional cell, as shown in (2) in FIG. 2.

In each of the foregoing two functions, the network device indicates, by using the DCI, the cell to which the terminal device is to initiate the random access procedure. Consequently, after receiving a piece of DCI, the terminal device is unaware of whether a cell indicated by the DCI is a cell for cell switching triggered by lower layer signaling or a cell for inter-cell multi-station transmission. That is, the foregoing two functions cannot be compatible.

SUMMARY

Embodiments of this application provide a communication method and apparatus, to implement compatibility between a function of cell switching triggered by lower layer signaling and a function of inter-cell multi-station transmission.

According to a first aspect, this application provides a communication method. The method may be performed by a terminal device, or may be performed by a component (for example, a chip) in the terminal device. This is not limited. For example, the method is performed by the terminal device. The method includes: The terminal device receives indication information from a network device, where the indication information includes a first field, and the first field indicates a cell in a first cell set, or indicates a cell in a second cell set; and sends a random access request message to the network device by using the cell indicated by the indication information.

The first cell set is a cell set for cell switching triggered by lower layer signaling. In other words, an element in the first cell set is a cell for cell switching triggered by lower layer signaling. In other words, the first cell set consists of the cell for cell switching triggered by lower layer signaling. In other words, the first cell set is a cell set corresponding to a function of cell switching triggered by lower layer signaling. In other words, a cell included in the first cell set is a cell related to (or associated with) the function of cell switching triggered by lower layer signaling. In other words, the first cell set is for the function of cell switching triggered by lower layer signaling.

Optionally, the cell set for cell switching triggered by lower layer signaling includes at least one serving cell and at least one candidate cell, the at least one serving cell is a serving cell configured by the network device for the terminal device, and the at least one candidate cell is a candidate cell configured by the network device for the terminal device. In other words, the first cell set includes the at least one serving cell and the at least one candidate cell. In other words, the first cell set consists of the at least one serving cell and the at least one candidate cell.

The second cell set is a cell set for inter-cell multi-station transmission. In other words, an element in the second cell set is a cell for inter-cell multi-station transmission. In other words, the second cell set consists of the cell for inter-cell multi-station transmission. In other words, the second cell set is a cell set corresponding to a function of inter-cell multi-station transmission. In other words, a cell included in the second cell set is a cell related to (or associated with) the function of inter-cell multi-station transmission. In other words, the second cell set is for the function of inter-cell multi-station transmission.

Optionally, the cell set for the inter-cell multi-station transmission includes a first serving cell and at least one additional cell corresponding to the first serving cell, and the first serving cell is a serving cell for receiving the indication information. In other words, the second cell set includes the first serving cell and the at least one additional cell corresponding to the first serving cell. In other words, the second cell set consists of the first serving cell and the at least one additional cell corresponding to the first serving cell.

For example, the indication information may be DCI, the indication information may include DCI, or the indication information may be included in DCI. This is not limited.

In this embodiment of this application, the first field in the indication information indicates the cell in the first cell set, or indicates the cell in the second cell set. In this way, the terminal device can determine whether a cell to which a random access procedure is to be initiated belongs to the first cell set or the second cell set. That is, a problem that the terminal device is unaware of whether to initiate the random access procedure to the cell in the first cell set or initiate the random access procedure to the cell in the second cell set is avoided. Therefore, the function of cell switching triggered by lower layer signaling and the function of inter-cell transmission can be compatible. In addition, when the indication information is the DCI, in this embodiment of this application, only one field (namely, the first field) in the DCI is needed to indicate the cell in the first cell set or indicate the cell in the second cell set. For example, a field indicating the cell to which random access is performed in the DCI may be reused, and a format of the DCI does not need to be changed, or a format of the DCI is slightly changed.

In a possible implementation, if the network device configures, for the terminal device, a function of cell switching triggered by lower layer signaling, the first field indicates the cell in the first cell set. This means that the cell indicated by the indication information is the cell in the first cell set.

In another possible implementation, if the network device configures a function of inter-cell multi-station transmission for the terminal device, the first field indicates the cell in the second cell set. This means that the cell indicated by the indication information is the cell in the second cell set.

In another possible implementation, if the network device configures a function of cell switching triggered by lower layer signaling and a function of inter-cell multi-station transmission for the terminal device, the indication information further includes a second field. The second field includes two values, for example, denoted as a first value and a second value. When a value of the second field is the first value, the first field indicates the cell in the first cell set. Correspondingly, the cell indicated by the indication information is the cell in the first cell set. Alternatively, when a value of the second field is the second value, the first field indicates the cell in the second cell set. Correspondingly, the cell indicated by the indication information is the cell in the second cell set.

According to a second aspect, this application provides a communication method. The method may be performed by a terminal device, or may be performed by a component (for example, a chip) in the terminal device. This is not limited. For example, the method is performed by the terminal device. The method includes: The terminal device receives indication information from a network device, where the indication information includes a third field and/or a fourth field, the third field indicates a cell in a first cell set, and the fourth field indicates a cell in a second cell set; and sends a random access request message to the network device by using the cell indicated by the indication information.

The first cell set is a cell set for cell switching triggered by lower layer signaling. Optionally, the cell set for cell switching triggered by lower layer signaling includes at least one serving cell and at least one candidate cell, the at least one serving cell is a serving cell configured by the network device for the terminal device, and the at least one candidate cell is a candidate cell configured by the network device for the terminal device.

The second cell set is a cell set for inter-cell multi-station transmission. Optionally, the cell set for the inter-cell multi-station transmission includes a first serving cell and at least one additional cell corresponding to the first serving cell, and the first serving cell is a serving cell for receiving the indication information.

For descriptions of the first cell set and the second cell set, correspondingly refer to the content in the first aspect. Details are not described herein again.

For example, the indication information may be DCI, the indication information may include DCI, or the indication information may be included in DCI. This is not limited.

In this embodiment of this application, the indication information indicates the cell in the first cell set by using the third field, or indicates the cell in the second cell set by using the fourth field. In this way, the terminal device can determine whether a cell to which a random access procedure is to be initiated belongs to the first cell set or the second cell set. That is, a problem that the terminal device is unaware of whether to initiate the random access procedure to the cell in the first cell set or initiate the random access procedure to the cell in the second cell set is avoided. Therefore, a function of cell switching triggered by lower layer signaling and a function of inter-cell transmission can be compatible. In addition, when the indication information is the DCI, in this embodiment of this application, two fields in the DCI respectively indicate the cell in the first cell set and the cell in the second cell set. In this way, after receiving the DCI, the terminal device can determine, by parsing the DCI, whether to determine the cell in the first cell set or determine the cell in the second cell set, so that processing complexity of the terminal device can be reduced.

In a possible implementation, if the network device configures, for the terminal device, a function of cell switching triggered by lower layer signaling, the indication information includes the third field, and does not include the fourth field. This means that the cell indicated by the indication information is the cell in the first cell set.

In another possible implementation, if the network device configures a function of inter-cell multi-station transmission for the terminal device, the indication information includes the fourth field, and does not include the third field. This means that the cell indicated by the indication information is the cell in the second cell set.

In another possible implementation, if the network device configures a function of cell switching triggered by lower layer signaling and a function of inter-cell multi-station transmission for the terminal device, the indication information includes the third field and the fourth field. In addition, the indication information further includes a fifth field. The fifth field includes two values, for example, denoted as a third value and a fourth value. When a value of the fifth field is the third value, the third field is valid, and the fourth field is invalid. This means that the cell indicated by the indication information is the cell in the first cell set. Alternatively, when a value of the fifth field is the fourth value, the third field is invalid, and the fourth field is valid. This means that the cell indicated by the indication information is the cell in the second cell set.

In another possible implementation, the first cell set includes a first serving cell and at least one candidate cell, and the second cell set includes the first serving cell and an additional cell that is in an active state and that corresponds to the first serving cell. If the network device configures a function of cell switching triggered by lower layer signaling and a function of inter-cell multi-station transmission for the terminal device, the indication information includes the third field and the fourth field. Further, if both the third field and the fourth field indicate the first serving cell, the indication information indicates the first serving cell; if the third field indicates the first serving cell, and the fourth field indicates the additional cell in the active state, the indication information indicates the additional cell in the active state; if the third field indicates a candidate cell, and the fourth field indicates the first serving cell, the indication information indicates the candidate cell; if a priority of the third field is higher than a priority of the fourth field, and the third field indicates a candidate cell, the indication information indicates the candidate cell; if a priority of the third field is higher than a priority of the fourth field, and the third field indicates the first serving cell, the cell indicated by the indication information is the cell indicated by the fourth field; if a priority of the fourth field is higher than a priority of the third field, and the fourth field indicates the additional cell in the active state, the indication information indicates the additional cell in the active state; or if a priority of the fourth field is higher than a priority of the third field, and the fourth field indicates the first serving cell, the cell indicated by the indication information is the cell indicated by the third field. For example, the priority of the third field may be replaced with a priority of the cell indicated by the third field, and the priority of the fourth field may be replaced with a priority of the cell indicated by the fourth field.

For example, a value of the third field may include a fifth value. When the value of the third field is the fifth value, the third field indicates the first serving cell. When the value of the third field is not the fifth value, in other words, the value of the third field is a value other than the fifth value, the third field indicates the candidate cell. Optionally, the fifth value is 0.

For example, a value of the fourth field includes a sixth value and a seventh value. When the value of the fourth field is the sixth value, the fourth field indicates the first serving cell. When the value of the fourth field is the seventh value, the fourth field indicates the additional cell in the active state. Optionally, the sixth value is 0, and the seventh value is 1.

In a possible implementation, a transmission reception point (transmission reception point, TRP) of the first serving cell includes a first TRP and a second TRP. If the network device configures a function of intra-cell multi-station transmission for the terminal device, the indication information may further indicate that a TRP corresponding to the random access procedure triggered by the indication information is the first TRP or the second TRP. For example, the indication information may include a sixth field, and the sixth field indicates the first TRP, or indicates the second TRP. Optionally, a value of the sixth field includes an eighth value and a ninth value. When the value of the sixth field is the eighth value, the indication information indicates the first TRP. When the value of the sixth field is the ninth value, the indication information indicates the second TRP.

Optionally, that the sixth field indicates the first TRP may be that the sixth field indicates a first timing advance group (timing advance group, TAG), where the first TAG corresponds to the first TRP; may be that the sixth field indicates an identifier of a first control channel group, where the first control channel group corresponds to the first TRP; or may be that the sixth field indicates a first path loss measurement resource, where the first path loss measurement resource corresponds to the first TRP.

Optionally, that the sixth field indicates the second TRP may be that the sixth field indicates a second TAG, where the second TAG corresponds to the second TRP; may be that the sixth field indicates an identifier of a second control channel group, where the second control channel group corresponds to the second TRP; or may be that the sixth field indicates a second path loss measurement resource, where the second path loss measurement resource corresponds to the second TRP.

In another possible implementation, a TRP of the first serving cell includes a first TRP and a second TRP. If the network device configures a function of intra-cell multi-station transmission for the terminal device, for example, the network device configures the function of intra-cell multi-station transmission for the terminal device in the first serving cell, the indication information may further indicate whether a TRP corresponding to the random access procedure triggered by the indication information is the same as a TRP corresponding to the indication information. For example, the indication information may include a sixth field, and the sixth field indicates whether the TRP corresponding to the random access procedure triggered by the indication information is the same as the TRP corresponding to the indication information. Optionally, a value of the sixth field includes an eighth value and a ninth value. When the value of the sixth field is the eighth value, the sixth field indicates that the TRP corresponding to the random access procedure triggered by the indication information is the same as the TRP corresponding to the indication information. When the value of the sixth field is the ninth value, the sixth field indicates that the TRP corresponding to the random access procedure triggered by the indication information is different from the TRP corresponding to the indication information.

Optionally, that the sixth field indicates that the TRP corresponding to the random access procedure triggered by the indication information is the same as the TRP corresponding to the indication information may be that the sixth field indicates that a TAG corresponding to the random access procedure triggered by the indication information is the same as a TAG corresponding to the indication information, or may be that the sixth field indicates that an identifier that is of a control channel group and that corresponds to the random access procedure triggered by the indication information is the same as an identifier that is of a control channel group and that corresponds to the indication information.

Optionally, that the sixth field indicates that the TRP corresponding to the random access procedure triggered by the indication information is different from the TRP corresponding to the indication information may be that the sixth field indicates that a TAG corresponding to the random access procedure triggered by the indication information is different from a TAG corresponding to the indication information, or may be that the sixth field indicates that an identifier that is of a control channel group and that corresponds to the random access procedure triggered by the indication information is different from an identifier that is of a control channel group and that corresponds to the indication information.

In a possible implementation, that the network device configures, in the first serving cell, the function of intra-cell multi-station transmission for the terminal device may be one or more of the following: Information indicating to enable the function of intra-cell multi-station transmission is configured; information about two timing advance groups (timing advance group, TAG) (for example, identification information of the two TAGs) is configured; information about one timing advance offset (offset) parameter is configured; information about two control channel groups (also referred to as two control channel groups) is configured; or no additional cell is configured.

In a possible implementation, if the network device configures the function of cell switching triggered by lower layer signaling and the function of intra-cell multi-station transmission for the terminal device, the indication information includes the third field and the sixth field. Further, if the third field indicates the first serving cell, and the sixth field indicates the first TRP, or indicates the second TRP, the indication information indicates the first serving cell, and the random access procedure triggered by the indication information is for the intra-cell multi-station transmission. Alternatively, if the third field indicates the candidate cell, and the sixth field indicates the first TRP, the indication information indicates the candidate cell, and the random access procedure triggered by the indication information is for cell switching triggered by lower layer signaling.

In another possible implementation, if the network device configures the function of cell switching triggered by lower layer signaling and the function of intra-cell multi-station transmission for the terminal device, the indication information includes the third field and the sixth field. Further, if the priority of the third field is higher than a priority of the sixth field, and the third field indicates the first serving cell, the indication information indicates the first serving cell, and the random access procedure triggered by the indication information is for the intra-cell multi-station transmission. Alternatively, if the priority of the third field is higher than a priority of the sixth field, and the third field indicates the candidate cell, the indication information indicates the candidate cell, and the random access procedure triggered by the indication information is for cell switching triggered by lower layer signaling.

In another possible implementation, if the network device configures the function of cell switching triggered by lower layer signaling and the function of intra-cell multi-station transmission for the terminal device, the indication information includes the third field and the sixth field. In addition, the indication information may further include a seventh field. A value of the seventh field includes a tenth value and an eleventh value. When the value of the seventh field is the tenth value, the third field is valid, and the sixth field is invalid. When the value of the seventh field is the eleventh value, the third field is invalid, and the sixth field is valid.

In another possible implementation, if the network device configures the function of cell switching triggered by lower layer signaling and the function of intra-cell multi-station transmission for the terminal device, the indication information includes the third field. In addition, the indication information further indicates an index of a synchronization signal/physical broadcast channel block (synchronization signal/physical broadcast channel block, SSB), and the SSB corresponds to the first TRP or the second TRP.

In a possible implementation, if the network device configures a function of multi-station transmission (the function of multi-station transmission is the function of inter-cell multi-station transmission or the function of intra-cell multi-station transmission) for the terminal device, the indication information includes an eighth field. Further, if the network device configures the function of inter-cell multi-station transmission for the terminal device, the indication information indicates the cell in the second cell set, for example, indicates the first serving cell, or indicates the additional cell in the active state; or if the network device configures the function of intra-cell multi-station transmission for the terminal device, the indication information indicates the first TRP, or indicates the second TRP.

For example, that the network device configures the function of multi-station transmission (the function of multi-station transmission is the function of inter-cell multi-station transmission or the function of intra-cell multi-station transmission) for the terminal device may be that the network device configures third configuration information for the terminal device, where the third configuration information may include one or more of the following: information indicating to enable the function of multi-station transmission, information about two timing advance offset parameters, information about two TAGs, or information about two control channel groups.

In a possible implementation, if the network device configures the function of cell switching triggered by lower layer signaling and the function of multi-station transmission for the terminal device, the indication information includes the third field and the eighth field. If the value of the third field is the fifth value (that is, the fifth field indicates the first serving cell), and a value of the eighth field is a sixth value or an eighth value (that is, the eighth field indicates the first serving cell, or indicates the first TRP), the indication information indicates the first serving cell, and the random access procedure triggered by the indication information is for the multi-station transmission. Further, if the value of the eighth field is the eighth value, the indication information further indicates that the TRP corresponding to the random access procedure is the first TRP.

Alternatively, if the value of the third field is the fifth value, and a value of the eighth field is a seventh value (that is, the eighth field indicates the additional cell in the active state), the indication information indicates the additional cell in the active state, and the random access procedure triggered by the indication information is for the multi-station transmission.

Alternatively, if the value of the third field is the fifth value, and a value of the eighth field is a ninth value (that is, the eighth field indicates the second TRP), the indication information indicates the first serving cell, the random access procedure triggered by the indication information is for the multi-station transmission, and the TRP corresponding to the random access procedure is the second TRP.

Alternatively, if the value of the third field is not the fifth value (that is, the third field indicates the candidate cell), and a value of the eighth field is a sixth value or an eighth value, the indication information indicates the candidate cell, and the random access procedure triggered by the indication information is for cell switching triggered by lower layer signaling.

In a possible implementation, if the network device configures the function of cell switching triggered by lower layer signaling and the function of multi-station transmission for the terminal device, the indication information includes the third field and the eighth field. If the priority of the third field is higher than a priority of the eighth field, and the value of the third field is not the fifth value (that is, the third field indicates the candidate cell), the indication information indicates the candidate cell indicated by the third field, and the random access procedure triggered by the indication information is for cell switching triggered by lower layer signaling.

Alternatively, if the priority of the third field is higher than a priority of the eighth field, the value of the third field is the fifth value (that is, the third field indicates the first serving cell), and a value of the eighth field is a sixth value or an eighth value (that is, the eighth field indicates the first serving cell, or indicates the first TRP), the indication information indicates the first serving cell, and the random access procedure triggered by the indication information is for the multi-station transmission. Further, if the value of the eighth field is the eighth value, the indication information further indicates that the TRP corresponding to the random access procedure is the first TRP.

Alternatively, if the priority of the third field is higher than a priority of the eighth field, the value of the third field is the fifth value, and a value of the eighth field is a seventh value (that is, the eighth field indicates the additional cell in the active state), the indication information indicates the additional cell in the active state, and the random access procedure triggered by the indication information is for the multi-station transmission.

Alternatively, if the priority of the third field is higher than a priority of the eighth field, the value of the third field is the fifth value, and a value of the eighth field is a ninth value (that is, the eighth field indicates the second TRP), the indication information indicates the first serving cell, the random access procedure triggered by the indication information is for the multi-station transmission, and the TRP corresponding to the random access procedure is the second TRP.

Optionally, the fifth value, the sixth value, and the eighth value are all 0, and the seventh value and the ninth value are both 1.

According to a third aspect, this application provides another communication method. The method may be performed by a network device, or may be performed by a component (for example, a chip) in the network device. This is not limited. For example, the method is performed by the network device. The method includes: The network device sends indication information to a terminal device, where the indication information includes a first field, and the first field indicates a cell in a first cell set, or indicates a cell in a second cell set; and receives a random access request message from the terminal device by using the cell indicated by the indication information.

The first cell set is a cell set for cell switching triggered by lower layer signaling. Optionally, the cell set for cell switching triggered by lower layer signaling includes at least one serving cell and at least one candidate cell, the at least one serving cell is a serving cell configured by the network device for the terminal device, and the at least one candidate cell is a candidate cell configured by the network device for the terminal device.

The second cell set is a cell set for inter-cell multi-station transmission. Optionally, the cell set for the inter-cell multi-station transmission includes a first serving cell and at least one additional cell corresponding to the first serving cell, and the first serving cell is a serving cell for receiving the indication information.

For descriptions of the first cell set and the second cell set, correspondingly refer to the content in the first aspect. Details are not described herein again.

For example, the indication information may be DCI, the indication information may include DCI, or the indication information may be included in DCI. This is not limited.

In a possible implementation, if the network device configures, for the terminal device, a function of cell switching triggered by lower layer signaling, the first field indicates the cell in the first cell set.

In another possible implementation, if the network device configures a function of inter-cell multi-station transmission for the terminal device, the first field indicates the cell in the second cell set.

In another possible implementation, if the network device configures a function of cell switching triggered by lower layer signaling and a function of inter-cell multi-station transmission for the terminal device, the indication information further includes a second field. The second field includes two values, for example, denoted as a first value and a second value. When a value of the second field is the first value, the first field indicates the cell in the first cell set. Correspondingly, the cell indicated by the indication information is the cell in the first cell set. Alternatively, when a value of the second field is the second value, the first field indicates the cell in the second cell set. Correspondingly, the cell indicated by the indication information is the cell in the second cell set.

According to a fourth aspect, this application provides another communication method. The method may be performed by a network device, or may be performed by a component (for example, a chip) in the network device. This is not limited. For example, the method is performed by the network device. The method includes: The network device sends indication information to a terminal device, where the indication information includes a third field and/or a fourth field, the third field indicates a cell in a first cell set, and the fourth field indicates a cell in a second cell set; and receives a random access request message from the terminal device by using the cell indicated by the indication information.

The first cell set is a cell set for cell switching triggered by lower layer signaling. Optionally, the cell set for cell switching triggered by lower layer signaling includes at least one serving cell and at least one candidate cell, the at least one serving cell is a serving cell configured by the network device for the terminal device, and the at least one candidate cell is a candidate cell configured by the network device for the terminal device.

The second cell set is a cell set for inter-cell multi-station transmission. Optionally, the cell set for the inter-cell multi-station transmission includes a first serving cell and at least one additional cell corresponding to the first serving cell, and the first serving cell is a serving cell for receiving the indication information.

For descriptions of the first cell set and the second cell set, correspondingly refer to the content in the first aspect. Details are not described herein again.

For example, the indication information may be DCI, the indication information may include DCI, or the indication information may be included in DCI. This is not limited.

In a possible implementation, if the network device configures, for the terminal device, a function of cell switching triggered by lower layer signaling, the indication information includes the third field, and does not include the fourth field. This means that the cell indicated by the indication information is the cell in the first cell set.

In another possible implementation, if the network device configures a function of inter-cell multi-station transmission for the terminal device, the indication information includes the fourth field, and does not include the third field. This means that the cell indicated by the indication information is the cell in the second cell set.

In another possible implementation, if the network device configures a function of cell switching triggered by lower layer signaling and a function of inter-cell multi-station transmission for the terminal device, the indication information includes the third field and the fourth field. In addition, the indication information further includes a fifth field. The fifth field includes two values, for example, denoted as a third value and a fourth value. When a value of the fifth field is the third value, the third field is valid, and the fourth field is invalid. This means that the cell indicated by the indication information is the cell in the first cell set. Alternatively, when a value of the fifth field is the fourth value, the third field is invalid, and the fourth field is valid. This means that the cell indicated by the indication information is the cell in the second cell set.

In another possible implementation, the first cell set includes a first serving cell and at least one candidate cell, and the second cell set includes the first serving cell and an additional cell that is in an active state and that corresponds to the first serving cell. If the network device configures a function of cell switching triggered by lower layer signaling and a function of inter-cell multi-station transmission for the terminal device, the indication information includes the third field and the fourth field. Further, if both the third field and the fourth field indicate the first serving cell, the indication information indicates the first serving cell; if the third field indicates the first serving cell, and the fourth field indicates the additional cell in the active state, the indication information indicates the additional cell in the active state; if the third field indicates a candidate cell, and the fourth field indicates the first serving cell, the indication information indicates the candidate cell; if a priority of the third field is higher than a priority of the fourth field, and the third field indicates a candidate cell, the indication information indicates the candidate cell; if a priority of the third field is higher than a priority of the fourth field, and the third field indicates the first serving cell, the cell indicated by the indication information is the cell indicated by the fourth field; if a priority of the fourth field is higher than a priority of the third field, and the fourth field indicates the additional cell in the active state, the indication information indicates the additional cell in the active state; or if a priority of the fourth field is higher than a priority of the third field, and the fourth field indicates the first serving cell, the cell indicated by the indication information is the cell indicated by the third field. For example, the priority of the third field may be replaced with a priority of the cell indicated by the third field, and the priority of the fourth field may be replaced with a priority of the cell indicated by the fourth field.

For example, a value of the third field may include a fifth value. When the value of the third field is the fifth value, the third field indicates the first serving cell. When the value of the third field is not the fifth value, in other words, the value of the third field is a value other than the fifth value, the third field indicates the candidate cell. Optionally, the fifth value is 0.

For example, a value of the fourth field includes a sixth value and a seventh value. When the value of the fourth field is the sixth value, the fourth field indicates the first serving cell. When the value of the fourth field is the seventh value, the fourth field indicates the additional cell in the active state. Optionally, the sixth value is 0, and the seventh value is 1.

In a possible implementation, a transmission reception point (transmission reception point, TRP) of the first serving cell includes a first TRP and a second TRP. If the network device configures a function of intra-cell multi-station transmission for the terminal device, the indication information may further indicate that a TRP corresponding to a random access procedure triggered by the indication information is the first TRP or the second TRP. For example, the indication information may include a sixth field, and the sixth field indicates the first TRP, or indicates the second TRP. Optionally, a value of the sixth field includes an eighth value and a ninth value. When the value of the sixth field is the eighth value, the indication information indicates the first TRP. When the value of the sixth field is the ninth value, the indication information indicates the second TRP.

Optionally, that the sixth field indicates the first TRP may be that the sixth field indicates a first TAG, where the first TAG corresponds to the first TRP; may be that the sixth field indicates an identifier of a first control channel group, where the first control channel group corresponds to the first TRP; or may be that the sixth field indicates a first path loss measurement resource, where the first path loss measurement resource corresponds to the first TRP.

Optionally, that the sixth field indicates the second TRP may be that the sixth field indicates a second TAG, where the second TAG corresponds to the second TRP; may be that the sixth field indicates an identifier of a second control channel group, where the second control channel group corresponds to the second TRP; or may be that the sixth field indicates a second path loss measurement resource, where the second path loss measurement resource corresponds to the second TRP.

In another possible implementation, a TRP of the first serving cell includes a first TRP and a second TRP. If the network device configures a function of intra-cell multi-station transmission for the terminal device, for example, the network device configures the function of intra-cell multi-station transmission for the terminal device in the first serving cell, the indication information may further indicate whether a TRP corresponding to a random access procedure triggered by the indication information is the same as a TRP corresponding to the indication information. For example, the indication information may include a sixth field, and the sixth field indicates whether the TRP corresponding to the random access procedure triggered by the indication information is the same as the TRP corresponding to the indication information. Optionally, a value of the sixth field includes an eighth value and a ninth value. When the value of the sixth field is the eighth value, the sixth field indicates that the TRP corresponding to the random access procedure triggered by the indication information is the same as the TRP corresponding to the indication information. When the value of the sixth field is the ninth value, the sixth field indicates that the TRP corresponding to the random access procedure triggered by the indication information is different from the TRP corresponding to the indication information.

Optionally, that the sixth field indicates that the TRP corresponding to the random access procedure triggered by the indication information is the same as the TRP corresponding to the indication information may be that the sixth field indicates that a TAG corresponding to the random access procedure triggered by the indication information is the same as a TAG corresponding to the indication information, or may be that the sixth field indicates that an identifier that is of a control channel group and that corresponds to the random access procedure triggered by the indication information is the same as an identifier that is of a control channel group and that corresponds to the indication information.

Optionally, that the sixth field indicates that the TRP corresponding to the random access procedure triggered by the indication information is different from the TRP corresponding to the indication information may be that the sixth field indicates that a TAG corresponding to the random access procedure triggered by the indication information is different from a TAG corresponding to the indication information, or may be that the sixth field indicates that an identifier that is of a control channel group and that corresponds to the random access procedure triggered by the indication information is different from an identifier that is of a control channel group and that corresponds to the indication information.

In a possible implementation, that the network device configures, in the first serving cell, the function of intra-cell multi-station transmission for the terminal device may be one or more of the following: Information indicating to enable the function of intra-cell multi-station transmission is configured; information about two timing advance groups (timing advance group, TAG) (for example, identification information of the two TAGs) is configured; information about one timing advance offset (offset) parameter is configured; information about two control channel groups (also referred to as two control channel groups) is configured; or no additional cell is configured.

In a possible implementation, if the network device configures the function of cell switching triggered by lower layer signaling and the function of intra-cell multi-station transmission for the terminal device, the indication information includes the third field and the sixth field. Further, if the third field indicates the first serving cell, and the sixth field indicates the first TRP, or indicates the second TRP, the indication information indicates the first serving cell, and the random access procedure triggered by the indication information is for the intra-cell multi-station transmission. Alternatively, if the third field indicates the candidate cell, and the sixth field indicates the first TRP, the indication information indicates the candidate cell, and the random access procedure triggered by the indication information is for cell switching triggered by lower layer signaling.

In another possible implementation, if the network device configures the function of cell switching triggered by lower layer signaling and the function of intra-cell multi-station transmission for the terminal device, the indication information includes the third field and the sixth field. Further, if the priority of the third field is higher than a priority of the sixth field, and the third field indicates the first serving cell, the indication information indicates the first serving cell, and the random access procedure triggered by the indication information is for the intra-cell multi-station transmission. Alternatively, if the priority of the third field is higher than a priority of the sixth field, and the third field indicates the candidate cell, the indication information indicates the candidate cell, and the random access procedure triggered by the indication information is for cell switching triggered by lower layer signaling.

In another possible implementation, if the network device configures the function of cell switching triggered by lower layer signaling and the function of intra-cell multi-station transmission for the terminal device, the indication information includes the third field and the sixth field. In addition, the indication information may further include a seventh field. A value of the seventh field includes a tenth value and an eleventh value. When the value of the seventh field is the tenth value, the third field is valid, and the sixth field is invalid. When the value of the seventh field is the eleventh value, the third field is invalid, and the sixth field is valid.

In another possible implementation, if the network device configures the function of cell switching triggered by lower layer signaling and the function of intra-cell multi-station transmission for the terminal device, the indication information includes the third field. In addition, the indication information further indicates an index of an SSB, and the SSB corresponds to the first TRP or the second TRP.

In a possible implementation, if the network device configures a function of multi-station transmission (the function of multi-station transmission is the function of inter-cell multi-station transmission or the function of intra-cell multi-station transmission) for the terminal device, the indication information includes an eighth field. Further, if the network device configures the function of inter-cell multi-station transmission for the terminal device, the indication information indicates the cell in the second cell set, for example, indicates the first serving cell, or indicates the additional cell in the active state; or if the network device configures the function of intra-cell multi-station transmission for the terminal device, the indication information indicates the first TRP, or indicates the second TRP.

For example, that the network device configures the function of multi-station transmission (the function of multi-station transmission is the function of inter-cell multi-station transmission or the function of intra-cell multi-station transmission) for the terminal device may be that the network device configures third configuration information for the terminal device, where the third configuration information may include one or more of the following: information indicating to enable the function of multi-station transmission, information about two timing advance offset parameters, information about two TAGs, or information about two control channel groups.

In a possible implementation, if the network device configures the function of cell switching triggered by lower layer signaling and the function of multi-station transmission for the terminal device, the indication information includes the third field and the eighth field. If the value of the third field is the fifth value (that is, the fifth field indicates the first serving cell), and a value of the eighth field is a sixth value or an eighth value (that is, the eighth field indicates the first serving cell, or indicates the first TRP), the indication information indicates the first serving cell, and the random access procedure triggered by the indication information is for the multi-station transmission. Further, if the value of the eighth field is the eighth value, the indication information further indicates that the TRP corresponding to the random access procedure is the first TRP.

Alternatively, if the value of the third field is the fifth value, and a value of the eighth field is a seventh value (that is, the eighth field indicates the additional cell in the active state), the indication information indicates the additional cell in the active state, and the random access procedure triggered by the indication information is for the multi-station transmission.

Alternatively, if the value of the third field is the fifth value, and a value of the eighth field is a ninth value (that is, the eighth field indicates the second TRP), the indication information indicates the first serving cell, the random access procedure triggered by the indication information is for the multi-station transmission, and the TRP corresponding to the random access procedure is the second TRP.

Alternatively, if the value of the third field is not the fifth value (that is, the third field indicates the candidate cell), and a value of the eighth field is a sixth value or an eighth value, the indication information indicates the candidate cell, and the random access procedure triggered by the indication information is for cell switching triggered by lower layer signaling.

In a possible implementation, if the network device configures the function of cell switching triggered by lower layer signaling and the function of multi-station transmission for the terminal device, the indication information includes the third field and the eighth field. If the priority of the third field is higher than a priority of the eighth field, and the value of the third field is not the fifth value (that is, the third field indicates the candidate cell), the indication information indicates the candidate cell indicated by the third field, and the random access procedure triggered by the indication information is for cell switching triggered by lower layer signaling.

Alternatively, if the priority of the third field is higher than a priority of the eighth field, the value of the third field is the fifth value (that is, the third field indicates the first serving cell), and a value of the eighth field is a sixth value or an eighth value (that is, the eighth field indicates the first serving cell, or indicates the first TRP), the indication information indicates the first serving cell, and the random access procedure triggered by the indication information is for the multi-station transmission. Further, if the value of the eighth field is the eighth value, the indication information further indicates that the TRP corresponding to the random access procedure is the first TRP.

Alternatively, if the priority of the third field is higher than a priority of the eighth field, the value of the third field is the fifth value, and a value of the eighth field is a seventh value (that is, the eighth field indicates the additional cell in the active state), the indication information indicates the additional cell in the active state, and the random access procedure triggered by the indication information is for the multi-station transmission.

Alternatively, if the priority of the third field is higher than a priority of the eighth field, the value of the third field is the fifth value, and a value of the eighth field is a ninth value (that is, the eighth field indicates the second TRP), the indication information indicates the first serving cell, the random access procedure triggered by the indication information is for the multi-station transmission, and the TRP corresponding to the random access procedure is the second TRP.

Optionally, the fifth value, the sixth value, and the eighth value are all 0, and the seventh value and the ninth value are both 1.

Based on any one of the first aspect to the fourth aspect, in a possible implementation, that the network device configures, for the terminal device, the function of cell switching triggered by lower layer signaling specifically includes: The network device configures first configuration information for the terminal device. In other words, that the network device configures, for the terminal device, the function of cell switching triggered by lower layer signaling may be specifically: The network device configures the first configuration information for the terminal device. In other words, that the network device configures, for the terminal device, the function of cell switching triggered by lower layer signaling means: The network device configures the first configuration information for the terminal device. In other words, the network device configures, for the terminal device in the following manner, the function of cell switching triggered by lower layer signaling: The network device configures the first configuration information for the terminal device.

For example, the first configuration information may include one or more of the following: information indicating to enable the function of cell switching triggered by lower layer signaling, identification information of at least one candidate cell, beam information of the at least one candidate cell, a related parameter for measuring the at least one candidate cell, a related parameter for random access to the at least one candidate cell, or a first information unit, where the first information unit is for configuring a related parameter of cell switching triggered by lower layer signaling. The at least one candidate cell is a candidate cell configured by the network device for the terminal device.

Based on any one of the first aspect to the fourth aspect, in a possible implementation, that the network device configures the function of inter-cell multi-station transmission for the terminal device specifically includes: The network device configures second configuration information for the terminal device. In other words, that the network device configures the function of inter-cell multi-station transmission for the terminal device may be specifically: The network device configures the second configuration information for the terminal device. In other words, that the network device configures the function of inter-cell multi-station transmission for the terminal device means: The network device configures the second configuration information for the terminal device. Alternatively, the network device configures the function of inter-cell multi-station transmission for the terminal device in the following manner: The network device configures the second configuration information for the terminal device.

For example, the second configuration information may include one or more of the following: information indicating to enable the function of inter-cell multi-station transmission, identification information of the at least one additional cell, information indicating an association relationship between the at least one additional cell and at least one transmission configuration indicator state, information indicating to perform inter-cell multi-station transmission by using two timing advances, information about two timing advance groups; information about two timing advance offset parameters, information about two control channel groups, a related parameter for random access to the at least one additional cell, or a second information unit, where the second information unit is for configuring a related parameter of the inter-cell multi-station transmission.

Optionally, the second configuration information includes configuration information corresponding to the first serving cell, or the second configuration information is a part of configurations in configuration information corresponding to the first serving cell. In other words, the second configuration information is configured by using a serving cell (namely, the first serving cell) as a granularity.

According to a fifth aspect, this application provides a communication apparatus. The communication apparatus is configured to perform the method according to any one of the first aspect, the second aspect, or the possible implementations of the first aspect or the second aspect. The communication apparatus is, for example, a terminal device, or a functional module in the terminal device, for example, a baseband apparatus or a chip system.

In a possible implementation, the communication apparatus includes a baseband apparatus and a radio frequency apparatus.

In another possible implementation, the communication apparatus includes a processing module (also referred to as a processing unit sometimes) and a transceiver module (also referred to as a transceiver unit sometimes). The transceiver module can implement a sending function and a receiving function. When the transceiver module implements the sending function, the transceiver module may be referred to as a sending module (also referred to as a sending unit sometimes). When the transceiver module implements the receiving function, the transceiver module may be referred to as a receiving module (also referred to as a receiving unit sometimes). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a sixth aspect, this application provides a communication apparatus. The communication apparatus is configured to perform the method according to any one of the third aspect, the fourth aspect, or the possible implementations of the third aspect or the fourth aspect. The communication apparatus is, for example, a network device, or a functional module in the network device, for example, a baseband apparatus or a chip system.

In a possible implementation, the communication apparatus includes a baseband apparatus and a radio frequency apparatus.

In another possible implementation, the communication apparatus includes a processing module (also referred to as a processing unit sometimes) and a transceiver module (also referred to as a transceiver unit sometimes). The transceiver module can implement a sending function and a receiving function. When the transceiver module implements the sending function, the transceiver module may be referred to as a sending module (also referred to as a sending unit sometimes). When the transceiver module implements the receiving function, the transceiver module may be referred to as a receiving module (also referred to as a receiving unit sometimes). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a seventh aspect, this application further provides a communication apparatus. The communication apparatus may include at least one processor. Optionally, the communication apparatus may further include a memory. The memory is configured to store one or more computer programs or instructions. The at least one processor is configured to execute the one or more computer programs or instructions stored in the memory, so that the communication apparatus performs the method according to any one of the first aspect to the fourth aspect or the possible implementations of the first aspect to the fourth aspect.

According to an eighth aspect, this application further provides a chip system. The chip system may include at least one processor. Optionally, the at least one processor is coupled to a memory. The at least one processor is configured to execute one or more computer programs or instructions in the memory, to implement the method according to any one of the first aspect to the fourth aspect or the possible implementations of the first aspect to the fourth aspect. Optionally, the chip system may consist of a chip, or may include the chip and another discrete component. Optionally, the chip system may further include the memory.

According to a ninth aspect, this application further provides a communication system. The communication system includes one or two of the following: the communication apparatus according to the fifth aspect or the communication apparatus according to the sixth aspect.

According to a tenth aspect, this application further provides a computer-readable storage medium. The computer-readable storage medium is configured to store a computer program or instructions. When the computer program or the instructions are run, the method according to any one of the first aspect to the fourth aspect or the possible implementations of the first aspect to the fourth aspect is caused to be implemented.

According to an eleventh aspect, this application further provides a computer program product including instructions. When the computer program product runs on a computer, the method according to any one of the first aspect to the fourth aspect or the possible implementations of the first aspect to the fourth aspect is caused to be implemented.

For technical effects that can be achieved in any one of the third aspect to the eleventh aspect or the possible implementations of the third aspect to the eleventh aspect, correspondingly refer to the technical effects that can be achieved in any one of the first aspect, the second aspect, or the possible implementations of the first aspect or the second aspect. Details are not described again.

## BRIEF DESCRIPTION OF DRAWINGS

FIG. 1 is a diagram of cell switching;
FIG. 2 is a diagram of initiating a random access procedure;
FIG. 3 is a diagram of a structure of a communication system;
FIG. 4 is a diagram of a structure of another communication system;
FIG. 5 is a diagram of a structure of still another communication system;
FIG. 6 is a schematic flowchart of a communication method according to an embodiment of this application;
FIG. 7 is a diagram of a structure of a communication apparatus according to an embodiment of this application;
FIG. 8 is a diagram of a structure of another communication apparatus according to an embodiment of this application; and
FIG. 9 is a diagram of a structure of still another communication apparatus according to an embodiment of this application.

## DESCRIPTION OF EMBODIMENTS

Embodiments of this application are presented around a system including a plurality of devices, components, modules, and the like. It should be understood that the system may include other devices, components, modules, and the like that are not mentioned, or may include only a part of devices, components, modules, and the like that are mentioned in embodiments.

Embodiments of this application provide a communication method and apparatus, to implement compatibility between a function of cell switching triggered by lower layer signaling and a function of inter-cell multi-station transmission. The method and the apparatus in this application are based on a same technical concept. Because problem-resolving principles of the method and the apparatus are similar, mutual reference may be made to implementation of the apparatus and the method. Repeated parts are not described again.

To make objectives, technical solution, and advantages of embodiments of this application clearer, the following further describes embodiments of this application in detail with reference to the accompanying drawings.

The following first describes communication systems to which embodiments of this application are applicable.

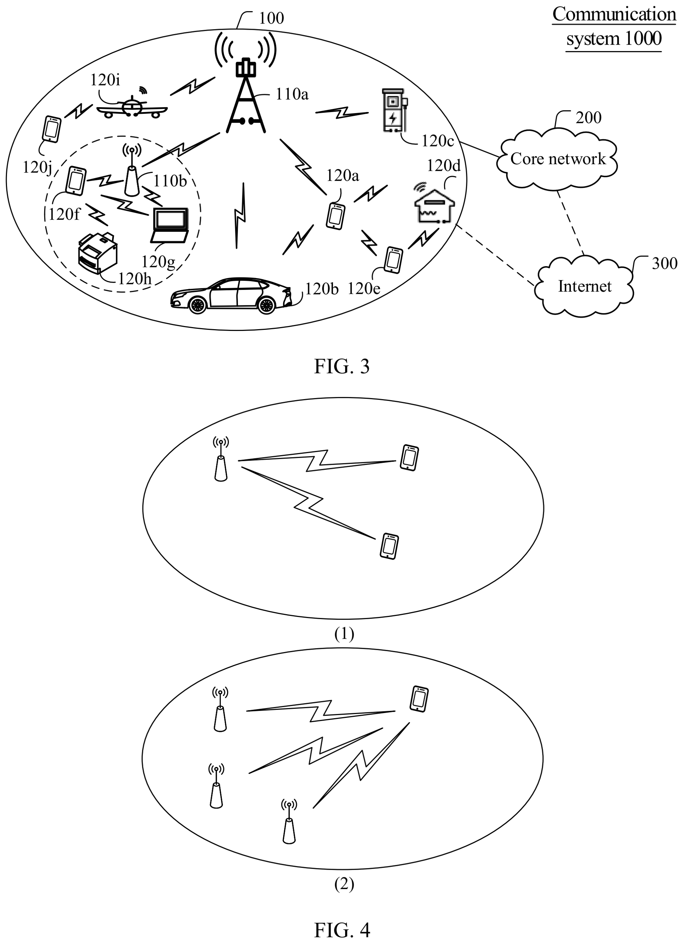

A network architecture and an application scenario described in embodiments of this application are intended to describe the technical solutions in embodiments of this application more clearly, and do not constitute a limitation to the technical solutions provided in embodiments of this application. A person of ordinary skill in the art may know that with evolution of the network architecture and emergence of new application scenarios, the technical solutions provided in embodiments of this application are also applicable to similar technical problems. In embodiments of this application, a communication system shown in FIG. 3 is used as an example for description. When the technical solutions in embodiments of this application are applied to another communication system, the devices, the components, the modules, and the like in embodiments may be replaced with corresponding devices, components, and modules in the another communication system. This is not limited.

As shown in FIG. 3, the communication system 1000 includes a radio access network (radio access network, RAN) 100 and a core network (core network, CN) 200. Optionally, the communication system 1000 may further include an internet 300. The RAN 100 includes at least one RAN node (for example, 110a and 110b in FIG. 3, which are collectively referred to as 110) and at least one terminal (for example, 120a to 120j in FIG. 3, which are collectively referred to as 120). The RAN 100 may further include another RAN node, for example, a wireless relay device and/or a wireless backhaul device (not shown in FIG. 3). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to the 3rd generation partnership project (3rd generation partnership project, 3GPP), for example, a 4th generation (4th generation, 4G) mobile communication system (for example, a long term evolution (long term evolution, LTE) system), a 5th generation (5th generation, 5G) mobile communication system (for example, a new radio (new radio, NR) system), or a future-oriented evolved system (for example, a 6th generation (6th generation, 6G) mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be referred to as an access network device, an access network element, a network device, a network apparatus, a RAN entity, an access node, or the like sometimes, constitutes a part of the communication system, and is configured to help the terminal implement radio access. A plurality of RAN nodes 110 in the communication system 1000 may be a same type of nodes, or may be different types of nodes. In some scenarios, roles of the RAN node 110 and the terminal 120 are relative. For example, the network element 120i in FIG. 3 may be a helicopter or an uncrewed aerial vehicle, and may be configured as a mobile base station. For terminals 120j that access the RAN 100 via the network element 120i, the network element 120i is a base station. However, for the base station 110a, the network element 120i is a terminal. The RAN node 110 and the terminal 120 are both referred to as communication apparatuses sometimes. For example, the network elements 110a and 110b in FIG. 3 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next-generation base station in the 6th generation (6th generation, 6G) mobile communication system, a base station in a future mobile communication system, an access node in the Wi-Fi system, or the like. The RAN node may be a macro base station (for example, 110a in FIG. 3), a micro base station or an indoor station (for example, 110b in FIG. 3), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, the plurality of RAN nodes coordinate to assist the terminal in implementing radio access, and different RAN nodes separately implement some base station functions. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). For ease of description, the CU, the CU-CP, the CU-UP, the DU, and the RU are used as examples for description in this application. Any unit in the CU (or the CU-CP and the CU-UP), the DU, and the RU in this application may be implemented by using a software module, a hardware module, or a combination of the software module and the hardware module.

In embodiments of this application, a function of the RAN node may alternatively be performed by a module (for example, a chip) in the RAN node, or may be performed by a control subsystem including a RAN node function. The control subsystem including the RAN node function herein may be a control center in the foregoing application scenarios such as smart grid, industrial control, smart transportation, and smart city.

The terminal may also be referred to as a terminal device, a terminal apparatus, user equipment (user equipment, UE), a mobile station, a mobile terminal, or the like. The terminal may be widely used in various scenarios such as device-to-device (device-to-device, D2D), vehicle to everything (vehicle to everything, V2X) communication, machine type communication (machine type communication, MTC), an internet of things (internet of things, IoT), virtual reality, augmented reality, industrial control, autonomous driving, telemedicine, smart grid, smart furniture, smart office, smart wearables, smart transportation, or smart city. For example, the terminal may be a mobile phone, a tablet computer, a computer with a wireless transceiver function, a wearable device, a vehicle, an uncrewed aerial vehicle, a helicopter, an airplane, a ship, a robot, a robot arm, or a smart home device. A device form of the terminal is not limited in embodiments of this application.

In embodiments of this application, the terminal function may alternatively be performed by a module (for example, a chip or a modem) in the terminal, or may be performed by an apparatus including the terminal function.

The RAN node and the terminal may be at fixed locations, or may be movable. The RAN node and the terminal may be deployed on land, and includes indoor or outdoor devices or handheld or vehicle-mounted devices; may be deployed on water; or may be deployed on an aircraft, a balloon, an artificial satellite in the air. Application scenarios of the RAN node and the terminal are not limited in embodiments of this application.

One RAN node may transmit data, control signaling, or the like to one or more terminals, as shown in (1) in FIG. 4. Alternatively, a plurality of RAN nodes may transmit data, control signaling, or the like to one terminal, as shown in (2) in FIG. 4.

Communication between the RAN node and the terminal complies with a protocol layer structure. A protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

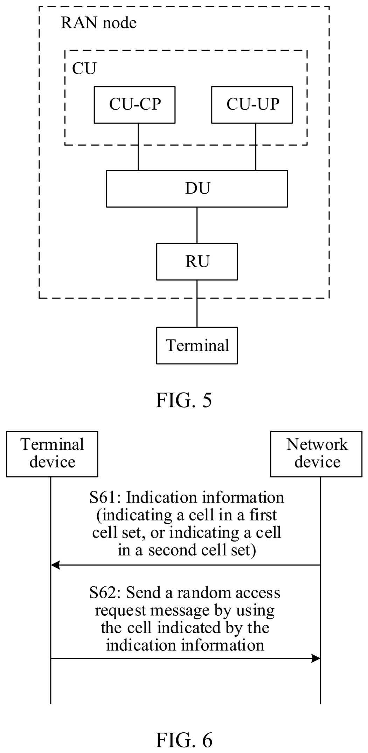

As shown in FIG. 5, a RAN node may include one or more CUs, one or more DUs, and one or more RUs. For clarity, FIG. 5 shows only one CU, one DU, and one RU. The CU is configured to connect to a core network and the one or more DUs. Optionally, the CU may have some core network functions. The CU may include a CU-CP and a CU-UP.

The CU and the DU may be configured based on wireless network protocol layer functions implemented by the CU and the DU. For example, the CU is configured to implement functions of a PDCP layer and a protocol layer (for example, an RRC layer and/or an SDAP layer) above the PDCP layer, and the DU is configured to implement functions of a protocol layer (for example, an RLC layer, a MAC layer, and/or a PHY layer) below the PDCP layer. For another example, the CU is configured to implement functions of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer.

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element that is in the core network and that is configured to implement a control plane function. The network element that is in the core network and that is configured to implement the control plane function may be an access and mobility function network element, for example, an access and mobility management function (access and mobility management function, AMF) network element in a 5G system. The access and mobility function network element is configured to be responsible for mobility management in a mobile network, for example, location update of a terminal device, network registration of the terminal device, and handover of the terminal device.

The CU-UP may interact with a network element that is in the core network and that is configured to implement a user plane function. The network element that is in the core network and that is configured to implement the user plane function, for example, a user plane function (user plane function, UPF) network element in the 5G system, is configured to be responsible for forwarding and receiving data in the terminal device.

The foregoing configuration of the CU and the DU is merely an example. Alternatively, functions of the CU and the DU may be configured based on a requirement. For example, the CU or the DU may be configured to have functions of more protocol layers, or the CU or the DU may be configured to have some processing functions of a protocol layer. For example, some functions of the RLC layer and a function of a protocol layer above the RLC layer are set on the CU, and a remaining function of the RLC layer and a function of a protocol layer below the RLC layer are set on the DU. For another example, division into functions of the CU or the DU may be performed based on a service type or another system requirement, for example, based on latency. Functions whose processing time needs to satisfy a low-latency requirement are set on the DU, and functions whose processing time does not need to satisfy the latency requirement are set on the CU.

The DU and the RU may cooperate to jointly implement a function of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher layer function of the PHY layer, and the RU is configured to: implement a lower layer function of the PHY layer, or implement the lower layer function and a radio frequency function. The higher layer function of the physical layer may include some functions of the physical layer, and the some functions are closer to the MAC layer. The lower layer function of the physical layer may include some other functions of the physical layer, and the some other functions are closer to an intermediate radio frequency side.

For example, Table 1 shows a correspondence between network elements in an ORAN system and protocol layer functions that can be implemented by the network elements. As shown in Table 1, an O-CU-CP is configured to implement functions of the RRC layer and a PDCP control plane (PDCP-control plane, PDCP-C) layer, an O-CU-UP is configured to implement functions of the SDAP layer and a PDCP user plane (PDCP-user plane, PDCP-U) layer, an O-DU is configured to implement functions of the RLC layer, the MAC layer, and a PHY-high (PHY-high) layer, and an O-RU is configured to implement functions of a PHY-low (PHY-low) layer.

Table 1

| ORAN network element | 3GPP protocol layer |
| --- | --- |
| O-CU-CP | RRC+PDCP-C |
| O-CU-UP | SDAP+PDCP-U |
| O-DU | RLC+MAC+PHY-high |
| O-RU | PHY-low |

The foregoing describes the communication systems to which embodiments of this application are applicable. The following describes some technical terms in embodiments of this application.

(1) Function of cell switching triggered by lower layer signaling, function of inter-cell multi-station transmission, and function of intra-cell multi-station transmission

The function of cell switching triggered by lower layer signaling is implementing cell switching of a terminal device based on lower layer (for example, layer 1 and/or layer 2) signaling (referred to as L1/L2 triggered mobility, LTM in a communication protocol). For example, a network device may obtain quality of a cell (for example, a serving cell and/or a candidate cell) by using a layer 1 (namely, physical layer) measurement reporting procedure; and the network device indicates, by using layer 2 (namely, medium access control layer) signaling, the terminal device to switch to the candidate cell.

The function of inter-cell multi-station transmission is performing transmission such as data transmission and control signaling transmission, by using a serving cell and at least one additional cell corresponding to the serving cell.

The function of intra-cell multi-station transmission is performing joint transmission by using two TRPs of a serving cell. Optionally, the two TRPs may correspond to two timing advance groups (timing advance group, TAG). That is, one of the two TRPs corresponds to one of the two TAGs, and one of the two TAGs corresponds to one of the two TRPs. For example, the two TRPs are denoted as a TRP 1 and a TRP 2, and the two TAGs corresponding to the two TRPs are denoted as a TAG 1 and a TAG 2. The TRP 1 may correspond to the TAG 1, and the TRP 2 may correspond to the TAG 2.

Optionally, the two TRPs may alternatively correspond to identifiers of two control channel groups (also referred to as control channel groups). That is, one of the two TRPs corresponds to one of the identifiers of the two control channel groups, and one of the identifiers of the two control channel groups corresponds to one of the two TRPs. For example, the two TRPs are denoted as a TRP 1 and a TRP 2, and the identifiers that are of the two control channel groups and that correspond to the two TRPs are denoted as an identifier 1 and an identifier 2. The TRP 1 may correspond to the identifier 1, and the TRP 2 may correspond to the identifier 2.

Optionally, the two TRPs may alternatively correspond to two path loss measurement resources. That is, one of the two TRPs corresponds to one of the two path loss measurement resources, and one of the two path loss measurement resources corresponds to one of the two TRPs. The path loss measurement resource is a path loss measurement resource for a random access request message in a random access procedure. For example, the two TRPs are denoted as a TRP 1 and a TRP 2, and the two path loss measurement resources corresponding to the two TRPs are denoted as a path loss measurement resource 1 and a path loss measurement resource 2. The TRP 1 may correspond to the path loss measurement resource 1, and the TRP 2 may correspond to the path loss measurement resource 2.

For brevity, the two TRPs are denoted as a first TRP and a second TRP hereinafter for description. Correspondingly, a TAG corresponding to the first TRP may be denoted as a first TAG, and a TAG corresponding to the second TRP may be denoted as a second TAG. An identifier that is of a control channel group and that corresponds to the first TRP is denoted as an identifier of a first control channel group, and an identifier that is of a control channel group and that corresponds to the second TRP is denoted as an identifier of a second control channel group. In addition, a path loss measurement resource corresponding to the first TRP is denoted as a first path loss measurement resource, and a path loss measurement resource corresponding to the second TRP is denoted as a second path loss measurement resource.

It should be noted that the serving cell includes the two TRPs. In this case, the first TRP may be a 1st TRP of the serving cell, and the second TRP may be a 2nd TRP of the serving cell. In other words, the term "first TRP" and the term "1st TRP" may be used interchangeably, and the term "second TRP" and the term "2nd TRP" may be used interchangeably.

Optionally, the first TAG may be a TAG with a smaller index or a TAG configured earlier, for example, a 1st TAG configured in the serving cell. The second TAG may be a TAG with a larger index or a TAG configured later, for example, a

2nd TAG configured in the serving cell. The first control channel group may be a control channel group with a smaller index, for example, a control channel group whose control channel group identifier is 0. The second control channel group may be a control channel group with a larger index, for example, a control channel group whose control channel group identifier is 1. In other words, the term "first TAG" and the term "1st TAG" may be used interchangeably, the term "second TAG" and the term "2nd TAG" may be used interchangeably, the term "first control channel group" and the term "1st control channel group" may be used interchangeably, and the term "second control channel group" and the term "2nd control channel group" may be used interchangeably.

The first path loss measurement resource may include any one of the following: a demodulation reference signal (demodulation reference signal, DMRS) resource indicated on a physical downlink control channel (physical downlink control channel, PDCCH), a quasi-colocation (quasi-colocation, QCL) resource for the PDCCH, a QCL resource in a transmission configuration indicator state (transmission configuration indicator state, TCI-state) for the PDCCH, a QCL resource in a 1st TCI-state in two downlink TCI-states indicated by a network device to a terminal device, or a QCL resource in a 2nd TCI-state in the two downlink TCI-states indicated by the network device to the terminal device. The PDCCH is a PDCCH that triggers the random access procedure, namely, a PDCCH that carries indication information hereinafter.

The second path loss measurement resource may include any one of the following: a synchronization signal/physical broadcast channel block (synchronization signal/physical broadcast channel block, SSB) resource indicated on the PDCCH, a QCL resource in one TCI-state indicated by the network device to the terminal device or activated by the network device for the terminal device (for example, a QCL resource in a 1st or 2nd TCI-state indicated by the network device to the terminal device or activated by the network device for the terminal device), a path loss measurement resource associated with the TCI-state indicated by the network device to the terminal device or activated by the network device for the terminal device (for example, a path loss measurement resource associated with the 1st or 2nd TCI-state indicated by the network device to the terminal device or activated by the network device for the terminal device), a QCL resource in a TCI-state associated with a TRP, a TAG, or a control channel group identifier corresponding to the random access procedure triggered by the PDCCH, or a path loss measurement resource associated with the TCI-state associated with the TRP, the TAG, or a control channel group corresponding to the random access procedure triggered by the PDCCH. The PDCCH is the PDCCH that triggers the random access procedure, namely, the PDCCH that carries the indication information hereinafter.

In an implementation, the second path loss measurement resource may be the SSB resource indicated on the PDCCH. The SSB resource indicated on the PDCCH may be further constrained by using a first constraint rule. According to the first constraint rule, the SSB resource needs to be a QCL resource corresponding to one of two TCI-states indicated by the network device to the terminal device, or a QCL resource of the QCL resource; or according to the first constraint rule, the SSB resource needs to be a path loss measurement resource corresponding to one of two TCI-states indicated by the network device to the terminal device, or a QCL resource of the path loss measurement resource. Alternatively, the SSB resource indicated on the PDCCH may be further constrained by using a second constraint rule. According to the second constraint rule, the SSB resource needs to be a QCL resource corresponding to one of TCI-states activated by the network device for the terminal device, or a QCL resource of the QCL resource; or according to the second constraint rule, the SSB resource needs to be a path loss measurement resource corresponding to one of TCI-states activated by the network device for the terminal device, or a QCL resource of the path loss measurement resource.

The first constraint rule and the second constraint rule are for ensuring that the SSB resource indicated on the PDCCH is the QCL resource or the path loss measurement resource that corresponds to the TCI-state indicated by the network device to the terminal device or activated by the network device for the terminal device, to lower a complexity requirement on the terminal device. If the foregoing constraint rules do not exist, it means that the network device may indicate any SSB resource to the terminal device by using the PDCCH, and the terminal device needs to calculate and store, in advance, path loss values corresponding to all SSB resources, resulting in excessively high complexity. In the two constraint rules, the first constraint rule is stricter (because the TCI-state indicated by the network device to the terminal device is a subset of active TCI-states), and an SSB resource that the network device may indicate to the terminal device under the first constraint rule is more limited. In this case, the complexity requirement on the terminal device is lower because the terminal device only needs to calculate and store, in advance, path losses corresponding to fewer SSB resources. A protocol may use only the first constraint rule, or use only the second constraint rule. A constraint rule to be used may alternatively be determined based on terminal capability reporting. Specifically, if the terminal device reports that the terminal device supports the second constraint rule, that is, supports the network device in indicating, to the terminal device, an SSB resource constrained by the second constraint rule, the SSB resource indicated on the PDCCH is constrained by the second constraint rule. If the terminal device reports that the terminal device does not support the second constraint rule, the SSB resource indicated on the PDCCH is constrained by the first constraint rule.

It should be understood that the first path loss measurement resource and the second path loss measurement resource in this application are not limited to the foregoing definitions, and may alternatively be other resources. In other words, when the first path loss measurement resource and the second path loss measurement resource are the other resources, embodiments of this application are still applicable.

(2) TCI-state associated with a TRP (or a TAG or a control channel group identifier) corresponding to a random access procedure

The TCI-state associated with the TRP (or the TAG or the control channel group identifier) corresponding to the random access procedure may be a TCI-state that has an association relationship with the TRP (or the TAG or the control channel group identifier) corresponding to the random access procedure in a plurality of TCI-states (for example, the two TCI-states) indicated by the network device to the terminal device, or may be a TCI-state in a group of TCI-states that have an association relationship with the TRP (or the TAG or the control channel group identifier) corresponding to the random access procedure in a plurality of groups of TCI-states activated by the network device for the terminal device, for example, a TCI-state with a smallest index in the group of TCI-states or a TCI-state corresponding to a smallest TCI value in the group of TCI-states.

The association relationship between the TAG and the TCI-state may be indicated by using a configuration message. For example, an associated TAG is configured for each TCI-state. The association relationship between the control channel group identifier and the TCI-state may be indicated by using medium access control control element (medium access control control element, MAC CE) signaling. For example, a group of TCI-states and a control channel group identifier associated with the group of TCI-states are indicated by using the MAC CE. The association relationship between the control channel group and the TCI-state may be indicated by using DCI signaling. For example, a TCI-state is indicated by using DCI corresponding to a control channel group identifier. In this case, the TCI-state is associated with the control channel group identifier.

(3) Serving cell, candidate cell, and additional cell

The serving cell is a cell that is configured by the network device for the terminal device and that is for data transmission. The network device needs to configure all parameters of the serving cell for the terminal device. This means that the terminal device can independently perform data transmission by using the serving cell.

The candidate cell is a cell that is configured by the network device for the terminal device and that is for cell switching. The terminal device may switch from a serving cell to a candidate cell. After the terminal device switches to the candidate cell, the network device may reconfigure the candidate cell as a serving cell. It should be noted that the network device may configure one candidate cell for the terminal device, or may configure a plurality of candidate cells for the terminal device. In this embodiment of this application, the candidate cell is for cell switching triggered by lower layer signaling.

The additional cell is a cell for performing data transmission in cooperation with the serving cell. In addition to the serving cell, the network device may further configure the additional cell for the terminal device. The network device does not need to configure all parameters of the additional cell for the terminal device, but configures information about the additional cell as a parameter of the serving cell for the terminal device. In other words, the additional cell is for performing data transmission by depending on the serving cell corresponding to (or associated with) the additional cell. This means that the terminal device cannot independently perform data transmission by using the additional cell. In embodiments of this application, the additional cell is for the inter-cell multi-station transmission. Unless otherwise specified, an additional cell hereinafter may be understood as an additional cell corresponding to a serving cell for sending the PDCCH. An additional cell in an active state may be understood as an additional cell in the active state in the additional cell corresponding to the serving cell for sending the PDCCH.

It should be noted that the network device may configure one additional cell for the terminal device, or may configure a plurality of additional cells for the terminal device. When the network device configures the plurality of additional cells for the terminal device, only one additional cell is in the active state simultaneously. The additional cell may be referred to as the additional cell in the active state (also referred to as an active additional cell). In other words, the terminal device may perform joint transmission by using a serving cell and an additional cell that is in the active state and that corresponds to the serving cell. In addition, an additional cell other than the additional cell in the active state in a plurality of additional cells corresponding to the serving cell may be referred to as an additional cell in an inactive state (also referred to as an inactive additional cell).

(4) Beam

The beam may be represented in an NR protocol as a spatial domain filter (spatial domain filter), also referred to as a spatial filter (spatial filter), also referred to as a spatial domain parameter (spatial domain parameter), a spatial parameter (spatial parameter), a spatial domain setting (spatial domain setting), a spatial setting (spatial setting), QCL information, a QCL assumption, a QCL indication, a TCI-state, a spatial relation (spatial relation), or the like. Therefore, in this application, the beam is equivalent to the spatial domain filter, the spatial filter, the spatial domain parameter, the spatial parameter, the spatial domain setting, the spatial setting, the QCL information, the QCL assumption, the QCL indication, the TCI-state (a DL TCI-state or a UL TCI-state), the spatial relation, and the like, and the foregoing concepts may be replaced with each other.

A beam for sending a signal may be referred to as a transmission beam (transmission beam, Tx beam), also referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using the TCI-state.

A beam for receiving a signal may be referred to as a reception beam (reception beam, Rx beam), also referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using the spatial relation spatial relation, the uplink TCI-state, or a sounding reference signal (sounding reference signal, SRS) resource (indicating a transmission beam using an SRS). Therefore, an uplink beam and the SRS resource may alternatively be equivalently replaced with each other.

The transmission beam may be distribution of signal strength formed in different directions in space after a signal is transmitted through an antenna, and the reception beam may be distribution of signal strength that is of a radio signal received from an antenna and that is in different directions in space.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, the network device sends different resources by using different beams, and the terminal device may determine quality of each beam by measuring each resource. The terminal device feeds back resource quality obtained through the measurement, and the network device learns of quality of the corresponding beam. During beam indication, indication is also performed by indicating the resource corresponding to the beam. For example, the network device indicates, to the terminal device, a TCI-state for downlink transmission, where the TCI-state includes a QCL resource, and the QCL resource indicates a specific beam. For details about how to indicate the beam by using the QCL resource, refer to the definition of the term TCI-state.

Optionally, a plurality of beams having same or similar communication features are considered as one beam. The beam may include one or more antenna ports for transmission of a data channel, a control channel, a sounding signal, and the like. The one or more antenna ports forming the beam may also be considered as one antenna port set.

(5) The resource in embodiments of this application may include a time domain resource, include a frequency domain resource, or include the time domain resource and the frequency domain resource. The time domain resource may include a symbol (symbol), a slot (slot), a mini-slot (mini-slot), a partial slot (partial slot), a sub-frame (sub-frame), a radio frame (frame), a sensing slot (sensing slot), or the like. This is not limited. The frequency domain resource may include a resource element (resource element, RE), a resource block (resource block, RB), an RB set (RB set), a subchannel (subchannel), a resource pool (resource pool), a bandwidth part (bandwidth part, BWP), a carrier (carrier), a channel (channel), an interlace (interlace), or the like. This is not limited.

(6) In embodiments of this application, "a plurality of" may mean two or more. In view of this, in embodiments of this application, "a plurality of" may alternatively be understood as "at least two". "At least one" may be understood as one or more, for example, one, two, or more. For example, "including at least one" means including one, two, or more, for example, including at least one of A, B, and C. In this case, A, B, C, A and B, A and C, B and C, or A, B and C may be included. "And/or" describes an association relationship between associated objects and three relationships may specifically exist. For example, A and/or B may represent the following three cases: Only A exists, both A and B exist, and only B exists. In addition, unless otherwise specified, the character "/" generally indicates an "or" relationship between the associated objects.

In addition, the terms "system" and "network" in embodiments of this application may be used interchangeably, and "according to" and "based on" may be used interchangeably.

Ordinal numerals such as "first" and "second" in embodiments of this application are usually for distinguishing between different objects, and are not for limiting a sequence, a time sequence, priorities, importance degrees, or the like of the plurality of objects. For example, a first cell set and a second cell set are for distinguishing between different cell sets, and do not limit priorities or importance degrees of the two cell sets.

The communication method provided in embodiments of this application may be applied to the communication system shown in any embodiment in FIG. 3 to FIG. 5. This is not limited. A network device may be the RAN node shown in any embodiment in FIG. 3 to FIG. 5 or a component in the RAN node shown in the any embodiment in FIG. 3 to FIG. 5. This is not limited. A terminal device may be the terminal shown in the any embodiment in FIG. 3 to FIG. 5 or a component in the terminal shown in the any embodiment in FIG. 3 to FIG. 5. This is not limited.

FIG. 6 is a schematic flowchart of a communication method according to an embodiment of this application. As shown in FIG. 6, the method may include the following content.

S61: A network device sends indication information to a terminal device. For example, the RU in the embodiment shown in FIG. 5 sends the indication information to the terminal device.

Accordingly, the terminal device receives the indication information from the terminal device.

In S61, the network device may send the indication information to the terminal device, to trigger the terminal device to initiate a random access procedure. The indication information may be DCI, the indication information may include DCI, or the indication information is included in DCI. This is not limited. Optionally, the indication information may alternatively be MAC CE signaling. The indication information may indicate a cell in a first cell set, or indicate a cell in a second cell set. In other words, the indication information may indicate a cell corresponding to the random access procedure triggered by the indication information, where the cell is the cell in the first cell set, or the cell is the cell in the second cell set.

The first cell set is a cell set for cell switching triggered by lower layer signaling. In other words, an element in the first cell set is a cell for cell switching triggered by lower layer signaling. In other words, the first cell set consists of the cell for cell switching triggered by lower layer signaling. In other words, the first cell set is a cell set corresponding to a function of cell switching triggered by lower layer signaling. In other words, a cell included in the first cell set is a cell related to (or associated with) the function of cell switching triggered by lower layer signaling. In other words, the first cell set is for the function of cell switching triggered by lower layer signaling.

The cell set for cell switching triggered by lower layer signaling includes at least one serving cell and at least one candidate cell. In other words, the cell set for cell switching triggered by lower layer signaling consists of the at least one serving cell and the at least one candidate cell. In other words, the first cell set includes the at least one serving cell and the at least one candidate cell, or consists of the at least one serving cell and the at least one candidate cell. The at least one serving cell is a serving cell configured by the network device for the terminal device. The at least one candidate cell is a candidate cell configured by the network device for the terminal device.

For example, the network device configures two serving cells for the terminal device, and the two serving cells are denoted as a serving cell 1 and a serving cell 2. In addition, the network device further configures three candidate cells for the terminal device, and the three candidate cells are denoted as a candidate cell 1, a candidate cell 2, and a candidate cell 3. In this case, the first cell set or the cell set for cell switching triggered by lower layer signaling may be expressed as {serving cell 1, serving cell 2, candidate cell 1, candidate cell 2, candidate cell 3}.

Alternatively, the cell set for cell switching triggered by lower layer signaling includes a first serving cell and at least one candidate cell. The at least one candidate cell is a candidate cell configured by the network device for the terminal device. Alternatively, the at least one candidate cell is a candidate cell corresponding to the first serving cell. Alternatively, the at least one candidate cell is a candidate cell corresponding to a cell group corresponding to the first serving cell.

The first serving cell is a serving cell for receiving (or sending) the indication information. Alternatively, the first serving cell is a serving cell corresponding to the indication information, for example, a cell for configuring a parameter corresponding to the indication information. It should be understood that at least one serving cell configured by the network device for the terminal device includes the first serving cell.

Optionally, that the first serving cell is the serving cell for receiving (or sending) the indication information may be replaced with that the first serving cell is a serving cell for receiving a PDCCH, where the PDCCH includes the indication information; or may be replaced with that the first serving cell is a serving cell for receiving the DCI, where the DCI includes the indication information.

For example, the network device configures two serving cells for the terminal device, and the two serving cells are denoted as a serving cell 1 and a serving cell 2. The serving cell 1 is the serving cell for receiving (or sending) the indication information. In addition, the network device further configures three candidate cells for the serving cell 1, and the three candidate cells are denoted as a candidate cell 1, a candidate cell 2, and a candidate cell 3. In this case, the first cell set or the cell set for cell switching triggered by lower layer signaling may be expressed as {serving cell 1, candidate cell 1, candidate cell 2, candidate cell 3}.

The second cell set is a cell set for inter-cell multi-station transmission. In other words, an element in the second cell set is a cell for inter-cell multi-station transmission. In other words, the second cell set consists of the cell for inter-cell multi-station transmission. In other words, the second cell set is a cell set corresponding to a function of inter-cell multi-station transmission. In other words, a cell included in the second cell set is a cell related to (or associated with) the function of inter-cell multi-station transmission. In other words, the second cell set is for the function of inter-cell multi-station transmission.

The cell set for the inter-cell multi-station transmission includes the first serving cell and at least one additional cell corresponding to the first serving cell. In other words, the cell set for the inter-cell multi-station transmission consists of the first serving cell and the at least one additional cell corresponding to the first serving cell. In other words, the second cell set includes the first serving cell and the at least one additional cell corresponding to the first serving cell. In other words, the second cell set consists of the first serving cell and the at least one additional cell corresponding to the first serving cell.

It should be noted that the second cell set may include all additional cells corresponding to the first serving cell. That is, the terminal device may initiate a random access procedure to any one (an additional cell in an active state or an additional cell in an inactive state) of all the additional cells corresponding to the first serving cell. In other words, the second cell set consists of the first serving cell and all the additional cells corresponding to the first serving cell. Initiating a random access procedure to a cell (also referred to as initiating random access to the cell for short) specifically means sending a random access request message to the network device by using the cell, for example, sending the random access request message to the network device by using a random access parameter (for example, a random access resource) of the cell.

Alternatively, the second cell set may include only an additional cell that is in an active state and that corresponds to the first serving cell, and does not include an additional cell that is in an inactive state and that corresponds to the first serving cell. That is, the terminal device initiates a random access procedure only to the additional cell that is in the active state and that corresponds to the first serving cell. In other words, the second cell set consists of the first serving cell and the additional cell that is in the active state and that corresponds to the first serving cell.

For example, the terminal device may send capability information to the network device, where the capability information indicates whether initiation of a random access procedure to an additional cell in the inactive state is supported. Accordingly, the network device receives the capability information, and determines the second cell set based on the capability information. If the terminal device supports the initiation of the random access procedure to the additional cell in the inactive state, the second cell set consists of the first serving cell and all additional cells corresponding to the first serving cell. If the terminal device does not support the initiation of the random access procedure to the additional cell in the inactive state, the second cell set consists of the first serving cell and the additional cell that is in the active state and that corresponds to the first serving cell.

Alternatively, the second cell set may include a specified quantity (for example, denoted as X, where X is a positive integer, for example, X is equal to 1) of additional cells that are in an inactive state and that correspond to the first serving cell. In other words, the second cell set consists of the first serving cell, an additional cell that is in an active state and that corresponds to the first serving cell, and the X additional cells that are in the inactive state and that correspond to the first serving cell. For example, it is predefined that the terminal device is allowed to initiate a random access procedure to any one of a maximum of the X additional cells that are in the inactive state and that correspond to the first serving cell. For another example, a value of X is reported by the terminal device to the network device by sending capability information to the network device. Specifically, the terminal device sends the capability information to the network device, where the capability information indicates whether initiation of a random access procedure to X additional cells in the inactive state is supported, or the capability information indicates whether including of X additional cells in the inactive state in the second cell set is supported.

Alternatively, the second cell set may include a specified quantity (for example, denoted as Y, where Y is a positive integer, for example, Y is equal to 1) of additional cells corresponding to the first serving cell. In other words, the second cell set consists of the first serving cell and the Y additional cells corresponding to the first serving cell. For example, it is predefined that the terminal device is allowed to initiate a random access procedure to any one of a maximum of the Y additional cells corresponding to the first serving cell. For another example, a value of Y is reported by the terminal device to the network device by sending capability information to the network device. Specifically, the terminal device sends the capability information to the network device, where the capability information indicates whether initiation of a random access procedure to Y additional cells is supported, or the capability information indicates whether including of Y additional cells in the second cell set is supported.

For descriptions of the first serving cell, refer to the foregoing content. In addition, the first serving cell may alternatively be a serving cell corresponding to an additional cell for receiving (or sending) the indication information. In other words, the terminal device may receive the indication information by using the serving cell, or may receive the indication information by using the additional cell corresponding to the serving cell.

For a term like the serving cell, the candidate cell, the additional cell, the function of cell switching triggered by lower layer signaling, the function of inter-cell multi-station transmission, the additional cell in the active state, or the additional cell in the inactive state, refer to the foregoing content. Details are not described again.

In this embodiment of this application, the indication information may indicate, by using the following several methods, the cell corresponding to the random access procedure triggered by the indication information, namely, the cell in the first cell set or the cell in the second cell set. The following describes the several methods in detail.

**Method 1:** The indication information includes a first field, and the first field indicates the cell in the first cell set, or indicates the cell in the second cell set.

**For example,** if the network device configures, for the terminal device, the function of cell switching triggered by lower layer signaling, the first field indicates the cell in the first cell set. In this example, a length (for example, denoted as L1) of the first field may be $\lceil log_2(M + N) \rceil$ bits. $\lceil \cdot \rceil$ is a round-up operation. M is a positive integer, and is a quantity of serving cells configured by the network device for the terminal device. The quantity of serving cells configured by the network device for the terminal device may alternatively be expressed as a quantity of cells included in the cell group to which the first serving cell belongs. N is a positive integer, and is a quantity of candidate cells configured by the network device for the terminal device. The quantity of candidate cells configured by the network device for the terminal device may alternatively be expressed as a quantity of candidate cells configured by the network device for the cell group to which the first serving cell belongs. The cell group to which the first serving cell belongs is a cell group consisting of at least one cell configured by the network device for the terminal device. For descriptions of the first serving cell, refer to the foregoing content. Details are not described again.

That the network device configures, for the terminal device, the function of cell switching triggered by lower layer signaling specifically includes: The network device configures first configuration information for the terminal device. In other words, that the network device configures, for the terminal device, the function of cell switching triggered by lower layer signaling means: The network device configures the first configuration information for the terminal device. In other words, the network device configures, for the terminal device in the following manner, the function of cell switching triggered by lower layer signaling: The network device configures the first configuration information for the terminal device. In other words, that the network device configures, for the terminal device, the function of cell switching triggered by lower layer signaling is specifically: The network device configures the first configuration information for the terminal device.

For example, the network device may determine the first configuration information. For example, the CU in the embodiment shown in FIG. 5 determines the first configuration information. Further, the network device may send the first configuration information to the terminal device. For example, the RU in the embodiment shown in FIG. 5 sends the first configuration information to the terminal device. Accordingly, the terminal device receives the first configuration information from the network device. The first configuration information may be carried in RRC signaling. This is not limited.

For example, the first configuration information may include one or more of the following:

information indicating to enable (or turn on, activate, start, or the like) the function of cell switching triggered by lower layer signaling;
information (for example, identification information) about at least one candidate cell, for example, a candidate cell identity set, where the set includes an identity of the at least one candidate cell;
beam information of at least one candidate cell, namely, a beam for transmission by using the at least one candidate cell;
a related parameter for measuring at least one candidate cell, for example, a to-be-measured resource or a measurement triggering state for triggering a measurement procedure;
a related parameter for random access to at least one candidate cell, for example, a resource for the random access to the at least one candidate cell, where the network device may allocate (or configure) a set of random access parameters to each serving cell and each candidate cell, to initiate a random access procedure to the serving cell or the candidate cell; or
a first information unit, where the first information unit is for configuring a related parameter of cell switching triggered by lower layer signaling; or in other words, the first information unit is for carrying the related parameter of cell switching triggered by lower layer signaling, where the related parameter may include, for example, one or more of information for enabling the function of cell switching triggered by lower layer signaling, information about at least one candidate cell, beam information of the at least one candidate cell, a related parameter for measuring the at least one candidate cell, or a related parameter for random access to the at least one candidate cell.

It should be noted that, in this example, the terminal device may perform a random access procedure to a serving cell. For example, the terminal device updates a TA of the serving cell by using the random access procedure.

Correspondingly, that the network device configures, for the terminal device, the function of cell switching triggered by lower layer signaling may be replaced with that the network device configures, for the terminal device, the information indicating to enable the function of cell switching triggered by lower layer signaling; may be replaced with that the network device configures the information about the at least one candidate cell for the terminal device; may be replaced with that the network device configures the beam information of the at least one candidate cell for the terminal device; may be replaced with that the network device configures, for the terminal device, the related parameter for measuring the at least one candidate cell; may be replaced with that the network device configures the first information unit for the terminal device; or may be replaced with that the network device configures the information indicating to enable the function of cell switching triggered by lower layer signaling and the information about the at least one candidate cell for the terminal device. Manners of other replacement are similar, and are not enumerated herein.

Optionally, the first configuration information is configured by the network device by using a cell group as a granularity. For example, the first configuration information is configuration information configured by the network device for the cell group corresponding to the first serving cell. For another example, the first configuration information is configuration information corresponding to the cell group corresponding to the first serving cell (or the cell group to which the first serving cell belongs), or is a part of the configuration information corresponding to the cell group corresponding to the first serving cell. That is, the first configuration information may be included in the configuration information corresponding to the cell group corresponding to the first serving cell.

**For another example,** if the network device configures the function of inter-cell multi-station transmission for the terminal device, the first field indicates the cell in the second cell set. In this example, a length (for example, denoted as L2) of the first field may be $\lceil log_2(1 + Q) \rceil$ bits. $\lceil \cdot \rceil$ is a round-up operation. Q is a positive integer, and is a quantity of the at least one additional cell corresponding to the first serving cell or a quantity of additional cells included in the second cell set. It should be understood that, when the second cell set includes only the additional cell that is in the active state and that corresponds to the first serving cell, a value of Q is 1. Correspondingly, the length of the first field is one bit.

That the network device configures the function of inter-cell multi-station transmission for the terminal device specifically includes: The network device configures second configuration information for the terminal device. In other words, that the network device configures the function of inter-cell multi-station transmission for the terminal device means: The network device configures the second configuration information for the terminal device. In other words, the network device configures the function of inter-cell multi-station transmission for the terminal device in the following manner: The network device configures the second configuration information for the terminal device. In other words, that the network device configures the function of inter-cell multi-station transmission for the terminal device is specifically: The network device configures the second configuration information for the terminal device.

For example, the network device may determine the second configuration information. For example, the CU in the embodiment shown in FIG. 5 determines the second configuration information. Further, the network device may send the second configuration information to the terminal device. For example, the RU in the embodiment shown in FIG. 5 sends the second configuration information to the terminal device. Accordingly, the terminal device receives the second configuration information from the network device. The second configuration information may be carried in RRC signaling. This is not limited.

For example, the second configuration information may include one or more of the following:

information indicating to enable (or turn on, activate, start, or the like) the function of inter-cell multi-station transmission;
information (for example, identification information) about the at least one additional cell, for example, an additional (additional) physical cell identifier (physical cell index, PCI);
information indicating an association relationship between the at least one additional cell and at least one TCI-state, where one additional cell is associated with one TCI-state, or in other words, the association relationship between the additional cell and the TCI-state is configured;
information indicating to perform inter-cell multi-station transmission by using two timing advances;
information about two timing advance groups (timing advance group, TAG) (for example, identification information of the two TAGs), where the TAG is a combination of cell groups sharing one TA value, one TAG corresponds to one TA value, and configuring the two TAGs means that two cells in the inter-cell multi-station transmission are separately for transmission by using one TA value;
information about two timing advance offset (offset) parameters (for example, values of two offsets), for calculating TA values of two TAGs;
information about two control channel groups (also referred to as two control channel groups), for example, identification information (for example, CORESETPoolIndex) of the two control channel groups, where one of the control channel groups is for a serving cell (for example, the first serving cell), and the remaining control channel group is for an additional cell;
a related parameter for random access to the at least one additional cell, for example, a resource for random access to at least one candidate cell, where the network device may allocate (or configure) a set of random access parameters to each serving cell and additional cell, to initiate a random access procedure to the serving cell or the additional cell; or
a second information unit, where the second information unit is for configuring a related parameter of the inter-cell multi-station transmission; or in other words, the second information unit is for carrying the related parameter of the inter-cell multi-station transmission, where the related parameters may include, for example, one or more of information indicating to enable the function of inter-cell multi-station transmission, information about the at least one additional cell, information indicating to perform inter-cell multi-station transmission by using two timing advances, information about two TAGs, information about two timing advance offset (offset) parameters, information about two control channel groups, or a related parameter for random access to the at least one additional cell.

It should be noted that, in this example, the terminal device may perform a random access procedure to a serving cell. For example, the terminal device updates a TA of the serving cell by using the random access procedure.

Correspondingly, that the network device configures the function of inter-cell multi-station transmission for the terminal device may be replaced with that the network device configures, for the terminal device, the information indicating to enable the function of inter-cell multi-station transmission; may be replaced with that the network device configures the information about the at least one additional cell for the terminal device; may be replaced with that the network device configures, for the terminal device, the information indicating to perform inter-cell multi-station transmission by using the two timing advances; may be replaced with that the network device configures the information about the two TAGs for the terminal device; may be replaced with that the network device configures the information about the two timing advance offset parameters for the terminal device; may be replaced with that the network device configures the information about the two control channel groups for the terminal device; may be replaced with that the network device configures the related parameter for the random access to the at least one additional cell for the terminal device; may be replaced with that the network device configures the second information unit for the terminal device; may be replaced with that the network device configures the information about the two TAGs and the second information unit for the terminal device; may be replaced with that the network device configures the information about the at least one additional cell and the information about the two TAGs for the terminal device; may be replaced with that the network device configures the information about the at least one additional cell, the information about the two TAGs, and the information about the two control channel groups for the terminal device; may be replaced with that the network device configures, for the terminal device, the information indicating the association relationship between the at least one additional cell and the at least one TCI-state; or may be replaced with that the network device configures, for the terminal device, the information indicating to enable the function of inter-cell multi-station transmission and the information indicating the association relationship between the at least one additional cell and the at least one TCI-state. Manners of other replacement are similar, and are not enumerated herein.

Optionally, the second configuration information is configured by the network device by using a cell as a granularity. For example, the second configuration information is configuration information configured by the network device for the first serving cell. For another example, the second configuration information may be configuration information corresponding to the first serving cell. Alternatively, the second configuration information may be a part of the configuration information corresponding to the first serving cell. That is, the second configuration information is included in the configuration information corresponding to the first serving cell.

When the indication information is the DCI, in the foregoing two examples, only one field (namely, the first field) in the DCI is needed to indicate the cell in the first cell set or indicate the cell in the second cell set. For example, a field indicating the cell to which random access is performed in the DCI may be reused, and a format of the DCI does not need to be changed. In addition, the function of cell switching triggered by lower layer signaling and the function of inter-cell transmission can be compatible.

**For still another example,** if the network device configures the function of cell switching triggered by lower layer signaling and the function of inter-cell multi-station transmission for the terminal device, the indication information may further include a second field. For example, the DCI further includes the second field. A value of the second field includes a first value and a second value. When the value of the second field is the first value, the first field indicates the cell in the first cell set. When the value of the second field is the second value, the first field indicates the cell in the second cell set. For example, a length of the second field is one bit. When the value of the second field is 0, the first field indicates the cell in the first cell set. When the value of the second field is 1, the first field indicates the cell in the second cell set. For another example, a length of the second field is one bit. When the value of the second field is 1, the first field indicates the cell in the first cell set. When the value of the second field is 0, the first field indicates the cell in the second cell set. In this example, a length of the first field may be a larger value in L1 and L2. For L1 and L2, refer to the foregoing content. Details are not described again.

That the network device configures the function of cell switching triggered by lower layer signaling and the function of inter-cell multi-station transmission for the terminal device means that the network device configures first configuration information and second configuration information for the terminal device. For descriptions of that the network device configures, for the terminal device, the function of cell switching triggered by lower layer signaling, that the network device configures the function of inter-cell multi-station transmission for the terminal device, the first configuration information, and the second configuration information, refer to the foregoing content. Details are not described herein again.

For example, the network device may determine the first configuration information and the second configuration information. For example, the CU in the embodiment shown in FIG. 5 determines the first configuration information and the second configuration information. Further, the network device may send the first configuration information and the second configuration information to the terminal device. For example, the RU in the embodiment shown in FIG. 5 sends the first configuration information and the second configuration information to the terminal device. Accordingly, the terminal device receives the first configuration information and the second configuration information from the network device. The first configuration information may be carried in RRC signaling. This is not limited. The second configuration information may be carried in RRC signaling. This is not limited. It should be understood that the first configuration information and the second configuration information may be carried in a same piece of signaling, or may be carried in different signaling. This is not limited.

When the indication information is the DCI, in the foregoing example, two fields (namely, the first field and the second field) in the DCI are needed to jointly indicate the cell in the first cell set or indicate the cell in the second cell set. For example, a field indicating the cell to which random access is performed in the DCI may be reused for one of the fields, and a format of the DCI is slightly changed. In addition, the function of cell switching triggered by lower layer signaling and the function of inter-cell transmission can be compatible.

**Method 2:** The indication information includes a third field, includes a fourth field, or includes the third field and the fourth field. The third field indicates the cell in the first cell set. The fourth field indicates the cell in the second cell set. For example, if the network device configures, for the terminal device, the function of cell switching triggered by lower layer signaling, the indication information may include the third field. For example, if the network device configures the function of inter-cell multi-station transmission for the terminal device, the indication information may include the fourth field.

In an implementation, a value of the third field may include at least a fifth value. When the value of the third field is the fifth value, the third field may be for the first serving cell. When the value of the third field is another value (namely, a value other than the fifth value), the third field may indicate the candidate cell. For the candidate cell, refer to the foregoing term description content. Details are not described again. Optionally, the fifth value may be 0. This is not limited. In another implementation, a length of the third field may be L1. For L1, refer to the foregoing content. Details are not described again. Unless otherwise specified, the following provides descriptions by using an example in which the fifth value is 0.

In an implementation, a value of the fourth field may include two values, for example, denoted as a sixth value and a seventh value. When the value of the fourth field is the sixth value, the fourth field may indicate the first serving cell. When the value of the fourth field is the seventh value, the fourth field may indicate the additional cell in the active state. For the additional cell in the active state, refer to the foregoing term description content. Details are not described again. Optionally, the sixth value may be 0, and the seventh value may be 1; or the sixth value may be 1, and the seventh value may be 0. This is not limited. In another implementation, a length of the fourth field may be L2. For L2, refer to the foregoing content. Details are not described again. Unless otherwise specified, the following provides descriptions by using an example in which the sixth value is 0 and the seventh value is 1.

**For example,** if the network device configures, for the terminal device, the function of cell switching triggered by lower layer signaling, and does not configure the function of inter-cell multi-station transmission for the terminal device, the indication information includes the third field (or the third field exists in the indication information), and does not include the fourth field (or the fourth field does not exist in the indication information). In this example, that the indication information includes the third field, and does not include the fourth field means that the terminal device determines, in the first cell set based on the third field, the cell indicated by the third field. In other words, the cell indicated by the indication information is the cell in the first cell set.

**For another example,** if the network device configures the function of inter-cell multi-station transmission for the terminal device, and does not configure, for the terminal device, the function of cell switching triggered by lower layer signaling, the indication information includes the fourth field (or the fourth field exists in the indication information), and does not include the third field (or the third field does not exist in the indication information). In this example, that the indication information includes the fourth field, and does not include the third field means that the terminal device determines, in the first cell set based on the fourth field, the cell indicated by the fourth field. In other words, the cell indicated by the indication information is the cell in the second cell set.

When the indication information is the DCI, in the foregoing two examples, two fields (namely, the third field and the fourth field) in the DCI respectively indicate the cell in the first cell set and the cell in the second cell set. In this way, after receiving the DCI, the terminal device can determine, by parsing the DCI, whether to determine the cell in the first cell set or determine the cell in the second cell set (that is, determine whether to initiate the random access procedure to the cell in the first cell set or initiate the random access procedure to the cell in the second cell set), so that processing complexity of the terminal device can be reduced, and the function of cell switching triggered by lower layer signaling and the function of inter-cell transmission can be compatible.

**For still another example,** if the network device configures the function of cell switching triggered by lower layer signaling and the function of inter-cell multi-station transmission for the terminal device, the indication information includes the third field and the fourth field. In addition, the indication information further includes a fifth field. A value of the fifth field includes a third value and a fourth value. When the value of the fifth field is the third value, the third field is valid, and the fourth field is invalid. When the value of the fifth field is the fourth value, the third field is invalid, and the fourth field is valid. For example, a length of the fifth field is one bit. When the value of the fifth field is 0, the third field is valid, and the fourth field is invalid. When the value of the fifth field is 1, the third field is invalid, and the fourth field is valid. For another example, a length of the fifth field is one bit. When the value of the fifth field is 1, the third field is valid, and the fourth field is invalid. When the value of the fifth field is 0, the third field is invalid, and the fourth field is valid. That the third field is valid, and the fourth field is invalid may be understood as that the terminal device ignores the fourth field, and determines, in the first cell set based on the third field, the cell indicated by the third field. That the third field is invalid, and the fourth field is valid may be understood as that the terminal device ignores the third field, and determines, in the second cell set based on the fourth field, the cell indicated by the fourth field.

When the indication information is DCI, in the foregoing example, three fields (namely, the third field, the fourth field, and the fifth field) in the DCI are needed to jointly indicate the cell in the first cell set or indicate the cell in the second cell set. In this way, the terminal device can determine, based on the fifth field, whether to determine the cell in the first cell set or determine the cell in the second cell set, so that the function of cell switching triggered by lower layer signaling and the function of inter-cell transmission can be compatible.

**For still another example,** if the network device configures the function of cell switching triggered by lower layer signaling and the function of inter-cell multi-station transmission for the terminal device, the indication information includes the third field and the fourth field. The terminal device may determine, based on the cell indicated by the third field and the cell indicated by the fourth field, the cell corresponding to the random access procedure triggered by the indication information, that is, determine a cell in which random access is performed, in other words, determine the cell indicated by the indication information. **In an implementation,** if both the third field and the fourth field indicate the first serving cell, the cell corresponding to the random access procedure triggered by the indication information is the first serving cell. That is, the cell indicated by the indication information is the first serving cell. For example, when the value of the third field is the fifth value (for example, 0), and the value of the fourth field is the sixth value (for example, 0), the cell indicated by the indication information is the first serving cell. **In another implementation,** if the third field indicates the first serving cell, and the fourth field indicates the additional cell in the active state, the cell corresponding to the random access procedure triggered by the indication information is the additional cell in the active state. That is, the cell indicated by the indication information is the additional cell in the active state. For example, when the value of the third field is the fifth value (for example, 0), and the value of the fourth field is the seventh value (for example, 1), the cell indicated by the indication information is the additional cell in the active state. **In still another implementation,** if the third field indicates the candidate cell, and the fourth field indicates the first serving cell, the cell corresponding to the random access procedure triggered by the indication information is the candidate cell. That is, the cell indicated by the indication information is the candidate cell indicated by the third field. For example, when the value of the third field is the value (for example, not 0) other than the fifth value, and the value of the fourth field is the sixth value (for example, 0), the cell indicated by the indication information is the candidate cell indicated by the third field. For the fifth value, the sixth value, and the seventh value, refer to the foregoing descriptions. Details are not described again. It should be understood that, it may be pre-stipulated that a case in which the third field indicates the candidate cell, and the fourth field indicates the additional cell in the active state cannot occur. For example, it is pre-stipulated that a case in which the value of the third field is the value other than the fifth value, and the value of the fourth field is the seventh value cannot occur. For example, a case in which neither of values of the third field and a seventh field is 0 cannot occur.

**For still another example,** if the network device configures the function of cell switching triggered by lower layer signaling and the function of inter-cell multi-station transmission for the terminal device, the indication information includes the third field and the fourth field. The terminal device may determine, based on priorities of the third field and the fourth field, the cell corresponding to the random access procedure triggered by the indication information, that is, determine a cell in which random access is performed, in other words, determine the cell indicated by the indication information. Alternatively, the terminal device may determine, based on priorities of the cell indicated by the third field and the cell indicated by the fourth field, the cell corresponding to the random access procedure triggered by the indication information, that is, determine a cell in which random access is performed, in other words, determine the cell indicated by the indication information. Alternatively, the terminal device may determine, based on priorities of the third field and the fourth field and priorities of the cell indicated by the third field and the cell indicated by the fourth field, the cell corresponding to the random access procedure triggered by the indication information, that is, determine a cell in which random access is performed, in other words, determine the cell indicated by the indication information. **In an implementation,** the priority of the third field is higher than the priority of the fourth field, and/or a priority of the candidate cell is higher than priorities of the additional cell in the active state and the first serving cell. The terminal device may first determine the cell indicated by the third field. Further, if the third field indicates the candidate cell (for example, the value of the third field is not the fifth value), the cell corresponding to the random access procedure triggered by the indication information is the candidate cell indicated by the third field. That is, the cell indicated by the indication information is the candidate cell indicated by the third field (in this case, the terminal device may ignore the fourth field). If the third field indicates the first serving cell (for example, the value of the third field is the fifth value), the cell corresponding to the random access procedure triggered by the indication information is the cell indicated by the fourth field. That is, the cell indicated by the indication information is the cell (for example, the first serving cell or the additional cell in the active state) indicated by the fourth field. **In another implementation,** the priority of the fourth field is higher than the priority of the third field, and/or a priority of the additional cell in the active state is higher than priorities of the candidate cell and the first serving cell. The terminal device may first determine the cell indicated by the fourth field. Further, if the fourth field indicates the additional cell in the active state (for example, the value of the fourth field is the seventh value), the cell corresponding to the random access procedure triggered by the indication information is the cell indicated by the fourth field. That is, the cell indicated by the indication information is the additional cell in the active state (in this case, the terminal device may ignore the third field). If the fourth field indicates the first serving cell (for example, the value of the fourth field is the sixth value), the cell corresponding to the random access procedure triggered by the indication information is the cell indicated by the third field. That is, the cell indicated by the indication information is the cell indicated by the third field.

In other words, when both a cell indication field and a physical cell identifier (physical cell identifier, PCI) indication field exist in a PDCCH order (order), the PDCCH order may be understood as follows: If the cell indication field indicates a candidate cell, a random access procedure triggered by the PDCCH order corresponds to the candidate cell, and the PCI indication field may be ignored by the terminal device. If the cell indication field does not indicate a candidate cell (that is, the cell indication field indicates a serving cell), a random access procedure triggered by the PDCCH order corresponds to the inter-cell multi-station transmission. Further, when the cell indication field indicates the serving cell, if the PCI indication field indicates the serving cell, the random access procedure triggered by the PDCCH order corresponds to the serving cell; or if the PCI indication field indicates an additional cell in the active state, the random access procedure triggered by the PDCCH order corresponds to the additional cell in the active state.

In the method 2, for descriptions of that the network device configures, for the terminal device, the function of cell switching triggered by lower layer signaling and that the network device configures the function of inter-cell multi-station transmission for the terminal device, refer to content in the method 1. Details are not described herein again.

In addition to the foregoing scenarios of cell switching triggered by lower layer signaling and inter-cell multi-station transmission, this embodiment of this application may be further applied to a scenario of intra-cell multi-station transmission. In the scenario of the intra-cell multi-station transmission, two TRPs of the first serving cell perform joint transmission. For details, refer to the term description content. Details are not described again. Correspondingly, in the scenario of the intra-cell multi-station transmission, the random access procedure triggered by the indication information may be a random access procedure for a first TRP, or may be a random access procedure for a second TRP. The "random access procedure for the first TRP" may be replaced with a "random access procedure for a first TAG", may be replaced with a "random access procedure for an identifier of a first control channel group", or may be replaced with a "random access procedure for a first path loss measurement resource". The "random access procedure for the second TRP" may be replaced with a "random access procedure for a second TAG", may be replaced with a "random access procedure for an identifier of a second control channel group", or may be replaced with a "random access procedure for a second path loss measurement resource".

In a possible implementation, if the network device configures a function of intra-cell multi-station transmission for the terminal device in a serving cell, the indication information includes a sixth field. The sixth field may indicate a TRP corresponding to the random access procedure triggered by the indication information. In an implementation, the sixth field may directly indicate the TRP corresponding to the random access procedure triggered by the indication information. For example, a value of the sixth field includes an eighth value and a ninth value. Optionally, a length of the sixth field may be one bit. The eighth value may be 0, and the ninth value may be 1; or the eighth value may be 1, and the ninth value may be 0. This is not limited. Unless otherwise specified, the following provides descriptions by using an example in which the eighth value is 0 and the ninth value is 1. Further, when the value of the sixth field is the eighth value (for example, 0), the sixth field may indicate that the TRP corresponding to the random access procedure triggered by the indication information is the first TRP. When the value of the sixth field is the ninth value (for example, 1), the sixth field may indicate that the TRP corresponding to the random access procedure triggered by the indication information is the second TRP.

In another implementation, the sixth field may alternatively indirectly indicate the TRP corresponding to the random access procedure triggered by the indication information. **For example,** the sixth field may indicate, by indicating a TAG, the TRP corresponding to the random access procedure triggered by the indication information. For example, a value of the sixth field includes an eighth value (for example, 0) and a ninth value (for example, 1). When the value of the sixth field is the eighth value, the sixth field may indicate the first TAG, which means that the TRP corresponding to the random access procedure triggered by the indication information is the first TRP corresponding to the first TAG. When the value of the sixth field is the ninth value, the sixth field may indicate the second TAG, which means that the TRP corresponding to the random access procedure triggered by the indication information is the second TRP corresponding to the second TAG. Optionally, the TAG indicated by the indication information may be a TAG associated with a TCI-state for the indication information. **For another example,** the sixth field may indicate, by indicating an identifier of a control channel group, the TRP corresponding to the random access procedure triggered by the indication information. For example, a value of the sixth field includes an eighth value (for example, 0) and a ninth value (for example, 1). When the value of the sixth field is the eighth value, the sixth field may indicate the identifier (for example, coresetPoolIndex 0) of the first control channel group, which means that the TRP corresponding to the random access procedure triggered by the indication information is the first TRP corresponding to the identifier of the first control channel group. When the value of the sixth field is the ninth value, the sixth field may indicate the identifier (for example, coresetPoolIndex 1) of the second control channel group, which means that the TRP corresponding to the random access procedure triggered by the indication information is the second TRP corresponding to the identifier of the second control channel group. **For still another example,** the sixth field may indicate, by indicating a path loss measurement resource for a random access request message in the random access procedure triggered by the indication information, a TRP corresponding to the random access procedure triggered by the indication information. For example, a value of the sixth field includes an eighth value (for example, 0) and a ninth value (for example, 1). When the value of the sixth field is the eighth value, the sixth field may indicate that the path loss measurement resource for the random access request message in the random access procedure triggered by the indication information is the first path loss measurement resource (for example, a QCL resource corresponding to the indication information), which means that the TRP corresponding to the random access procedure triggered by the indication information is the first TRP corresponding to the first path loss measurement resource. When the value of the sixth field is the ninth value, the sixth field may indicate that the path loss measurement resource for the random access request message in the random access procedure triggered by the indication information is the second path loss measurement resource (a synchronization signal/physical broadcast channel block (synchronization signal/physical broadcast channel block, SSB) resource indicated by the indication information), which means that the TRP corresponding to the random access procedure triggered by the indication information is the second TRP corresponding to the second path loss measurement resource. For the eighth value and the ninth value, refer to the foregoing content. Details are not described again.

As mentioned above, the sixth field may indicate the TRP corresponding to the random access procedure triggered by the indication information. In another possible implementation, the sixth field may alternatively indicate whether a TRP corresponding to the random access procedure triggered by the indication information is the same as a TRP corresponding to the indication information. The TRP corresponding to the indication information is a TRP for sending the indication information. **In an implementation,** the sixth field may directly indicate whether the TRP corresponding to the random access procedure triggered by the indication information is the same as the TRP corresponding to the indication information. For example, a value of the sixth field includes an eighth value (for example, 0) and a ninth value (for example, 1). When the value of the sixth field is the eighth value, the sixth field may indicate that the TRP corresponding to the random access procedure triggered by the indication information is the same as the TRP corresponding to the indication information. When the value of the sixth field is the ninth value, the sixth field may indicate that the TRP corresponding to the random access procedure triggered by the indication information is different from the TRP corresponding to the indication information. For the eighth value and the ninth value, refer to the foregoing content. Details are not described again.

**In another implementation,** the sixth field may alternatively indirectly indicate whether the TRP corresponding to the random access procedure triggered by the indication information is the same as the TRP corresponding to the indication information. **For example,** the sixth field may indicate, by indicating whether a TAG corresponding to the random access procedure triggered by the indication information is the same as a TAG corresponding to the indication information, whether the TRP corresponding to the random access procedure triggered by the indication information is the same as the TRP corresponding to the indication information. When the TAG corresponding to the random access procedure triggered by the indication information is the same as the TAG corresponding to the indication information, the TRP corresponding to the random access procedure triggered by the indication information is also the same as the TRP corresponding to the indication information. When the TAG corresponding to the random access procedure triggered by the indication information is different from the TAG corresponding to the indication information, the TRP corresponding to the random access procedure triggered by the indication information is also different from the TRP corresponding to the indication information. For example, a value of the sixth field includes an eighth value (for example, 0) and a ninth value (for example, 1). When the value of the sixth field is the eighth value, the sixth field may indicate that the TAG corresponding to the random access procedure triggered by the indication information is the same as the TAG corresponding to the indication information. When the value of the sixth field is the ninth value, the sixth field may indicate that the TAG corresponding to the random access procedure triggered by the indication information is different from the TAG corresponding to the indication information. **For another example,** the sixth field may indicate, by indicating whether an identifier that is of a control channel group and that corresponds to the random access procedure triggered by the indication information is the same as an identifier that is of a control channel group and that corresponds to the indication information, whether the TRP corresponding to the random access procedure triggered by the indication information is the same as the TRP corresponding to the indication information. When the identifier that is of the control channel group and that corresponds to the random access procedure triggered by the indication information is the same as the identifier that is of the control channel group and that corresponds to the indication information, the TRP corresponding to the random access procedure triggered by the indication information is also the same as the TRP corresponding to the indication information. When the identifier that is of the control channel group and that corresponds to the random access procedure triggered by the indication information is different from the identifier that is of the control channel group and that corresponds to the indication information, the TRP corresponding to the random access procedure triggered by the indication information is also different from the TRP corresponding to the indication information. For example, a value of the sixth field includes an eighth value (for example, 0) and a ninth value (for example, 1). When the value of the sixth field is the eighth value, the sixth field may indicate that the identifier that is of the control channel group and that corresponds to the random access procedure triggered by the indication information is the same as the identifier that is of the control channel group and that corresponds to the indication information. When the value of the sixth field is the ninth value, the sixth field may indicate that the identifier that is of the control channel group and that corresponds to the random access procedure triggered by the indication information is different from the identifier that is of the control channel group and that corresponds to the indication information. For the eighth value and the ninth value, refer to the foregoing content. Details are not described again.

For example, that the network device configures the function of intra-cell multi-station transmission for the terminal device in the serving cell (for example, the first serving cell) specifically means that information configured by the network device for the terminal device satisfies one or more of the following conditions:

Information indicating to enable (or turn on, activate, start, or the like) the function of intra-cell multi-station transmission is configured;

information about two timing advance groups (timing advance group, TAG) (for example, identification information of the two TAGs) is configured;
information about one timing advance offset (offset) parameter is configured;
information about two control channel groups (also referred to as two control channel groups) is configured; or
no additional cell is configured.

Correspondingly, that the network device configures the function of intra-cell multi-station transmission for the terminal device in the serving cell may be replaced with that the network device configures the information about the two TAGs and the information about the two control channel groups (for example, identification information of the two control channel groups) for the terminal device in the serving cell and that no additional cell is configured; or may be replaced with that the network device configures the information indicating to enable the function of intra-cell multi-station transmission, the information about the two TAGs, and the information about the timing advance offset parameter for the terminal device in the serving cell and that no additional cell is configured. Manners of other replacement are similar, and are not enumerated herein.

In a possible implementation, if the network device configures the function of cell switching triggered by lower layer signaling and the function of intra-cell multi-station transmission for the terminal device, the indication information includes the third field and the sixth field. The third field may indicate the cell in the first cell set. For details, refer to the foregoing descriptions. Details are not described again. The sixth field may indicate the TRP corresponding to the random access procedure triggered by the indication information. For details, refer to the foregoing descriptions. Details are not described again.

In this implementation, the indication information includes the third field and the sixth field, and the terminal device may determine whether the random access procedure triggered by the indication information is for cell switching triggered by lower layer signaling or for the intra-cell multi-station transmission. In an implementation, the terminal device may determine, based on the third field and the sixth field, whether the random access procedure triggered by the indication information is for cell switching triggered by lower layer signaling or for the intra-cell multi-station transmission. **For example,** if the third field indicates the first serving cell (for example, the value of the third field is the fifth value (for example, 0)), and the sixth field indicates the first TRP (for example, the value of the sixth field is the eighth value (for example, 0)), the terminal device may determine that the random access procedure triggered by the indication information is for the **intra-cell multi-station transmission,** and determine that the cell corresponding to the random access procedure is the first serving cell. Further, the random access procedure triggered by the indication information satisfies one or more of the following features: The random access procedure corresponds to the first TRP of the first serving cell, the TRP corresponding to the random access procedure is the same as the TRP indicated by the indication information (namely, the first TRP indicated by the sixth field), the random access procedure corresponds to the first TAG of the first serving cell, the TAG corresponding to the random access procedure is the same as the TAG corresponding to the indication information, the random access procedure corresponds to the identifier of the first control channel group of the first serving cell, the identifier that is of the control channel group and that corresponds to the random access procedure is the same as the identifier that is of the control channel group (namely, the identifier of the first control channel group) and that corresponds to the indication information, or the first path loss measurement resource corresponding to the QCL resource of the indication information is for the random access request message in the random access procedure. **For another example,** if the third field indicates the first serving cell (for example, the value of the third field is the fifth value (for example, 0)), and the sixth field indicates the second TRP (for example, the value of the sixth field is the ninth value (for example, 1)), the terminal device may determine that the random access procedure triggered by the indication information is for the **intra-cell multi-station transmission,** and determine that the cell corresponding to the random access procedure is the first serving cell. Further, the random access procedure triggered by the indication information satisfies one or more of the following features: The random access procedure corresponds to the second TRP of the first serving cell, the TRP corresponding to the random access procedure is different from the TRP indicated by the indication information (namely, the second TRP indicated by the sixth field), the random access procedure corresponds to the second TAG of the first serving cell, the TAG corresponding to the random access procedure is different from the TAG corresponding to the indication information, the random access procedure corresponds to the identifier of the second control channel group of the first serving cell, the identifier that is of the control channel group and that corresponds to the random access procedure is different from the identifier that is of the control channel group (namely, the identifier of the second control channel group) and that corresponds to the indication information, or the second path loss measurement resource corresponding to the SSB resource indicated in the indication information is for the random access request message in the random access procedure. **For still another example,** if the third field indicates the candidate cell (for example, the value of the third field is the value (for example, not 0) other than the fifth value), and the sixth field indicates the first TRP (for example, the value of the sixth field is the eighth value (for example, 0)), the terminal device may determine that the random access procedure triggered by the indication information is for **cell switching triggered by lower layer signaling,** and determine that the cell corresponding to the random access procedure is the candidate cell indicated by the third field. For the fifth value, the eighth value, and the ninth value, refer to the foregoing content. Details are not described again. It should be understood that, it may be pre-stipulated that a case in which the third field indicates a 1st candidate cell, and the sixth field indicates the second TRP cannot occur. For example, it is pre-stipulated that a case in which the value of the third field is the value other than the fifth value, and the value of the sixth field is the ninth value cannot occur. For example, a case in which neither of the values of the third field and the sixth field is 0 cannot occur.

For example, for the intra-cell multi-station transmission and the inter-cell multi-station transmission, when the TRP corresponding to the random access procedure is different from a TRP for sending the PDCCH order, a path loss resource for determining a transmit power for sending the triggered random access procedure is an SSB resource indicated by the PDCCH order. When the TRP corresponding to the random access procedure is the same as a TRP for sending the PDCCH order, a path loss resource for determining a transmit power for sending the triggered random access procedure is a QCL resource for the PDCCH order.

For example, the terminal device may determine, based on a TAG that is associated with an SSB and that is indicated by the PDCCH order, whether the random access procedure triggered by the PDCCH order is sent to the TRP for sending the PDCCH order or sent to another TRP. For example, if the TAG associated with the SSB indicated by the PDCCH order is the same as a TAG associated with a TCI-state for the PDCCH order, the random access procedure triggered by the PDCCH order is sent to the TRP for sending the PDCCH order; or if the TAG associated with the SSB indicated by the PDCCH order is different a TAG associated with a TCI-state for the PDCCH order, the random access procedure triggered by the PDCCH order is sent to the another TRP.

In another implementation, the terminal device may alternatively determine, based on priorities of the third field and the sixth field, whether the random access procedure triggered by the indication information is for cell switching triggered by lower layer signaling or for the intra-cell multi-station transmission. **For example,** the priority of the third field is higher than the priority of the sixth field, and the terminal device may first determine the cell indicated by the third field. Further, if the third field indicates the candidate cell (for example, the value of the third field is the value other than the fifth value), the terminal device may determine that the random access procedure triggered by the indication information is for **cell switching triggered by lower layer signaling,** and determine that the cell corresponding to the random access procedure is the cell indicated by the third field (in this case, the terminal device may ignore the sixth field). If the third field indicates the first serving cell (for example, the value of the third field is the fifth value), the terminal device may determine that the random access procedure triggered by the indication information is for the **intra-cell multi-station transmission,** and determine that the cell corresponding to the random access procedure is the first serving cell.

For example, when the priority of the third field is higher than the priority of the sixth field, and the third field indicates the first serving cell, the terminal device may further determine, based on the sixth field, one or more of the TAG, the TRP, the identifier of the control channel group, or the path loss measurement resource corresponding to the random access procedure triggered by the indication information. For details, refer to the foregoing definition of the sixth field. For example, if the sixth field indicates the first TRP (for example, the value of the sixth field is the eighth value (for example, 0)), the random access procedure triggered by the indication information satisfies one or more of the following features: The random access procedure corresponds to the first TRP of the first serving cell, the TRP corresponding to the random access procedure is the same as the TRP indicated by the indication information, the random access procedure corresponds to the first TAG of the first serving cell, the TAG corresponding to the random access procedure is the same as the TAG corresponding to the indication information, the random access procedure corresponds to the identifier of the first control channel group of the first serving cell, the identifier that is of the control channel group and that corresponds to the random access procedure is the same as the identifier that is of the control channel group (namely, the identifier of the first control channel group) and that corresponds to the indication information, or the first path loss measurement resource corresponding to the QCL resource of the indication information is for the random access request message in the random access procedure. For another example, if the sixth field indicates the second TRP (for example, the value of the sixth field is the ninth value (for example, 1)), the random access procedure triggered by the indication information may satisfy one or more of the following features: The random access procedure corresponds to the second TRP of the first serving cell, the TRP corresponding to the random access procedure is different from the TRP indicated by the indication information (namely, the second TRP indicated by the sixth field), the random access procedure corresponds to the second TAG of the first serving cell, the TAG corresponding to the random access procedure is different from the TAG corresponding to the indication information, the random access procedure corresponds to the identifier of the second control channel group of the first serving cell, the identifier that is of the control channel group and that corresponds to the random access procedure is different from the identifier that is of the control channel group (namely, the identifier of the second control channel group) and that corresponds to the indication information, or the second path loss measurement resource corresponding to the SSB resource indicated in the indication information is for the random access request message in the random access procedure.

In another possible implementation, if the network device configures the function of cell switching triggered by lower layer signaling and the function of intra-cell multi-station transmission for the terminal device, the indication may further include a seventh field in addition to the third field and the sixth field. A value of the seventh field includes a tenth value and an eleventh value. When the value of the seventh field is the tenth value, the third field is valid, and the sixth field is invalid. When the value of the seventh field is the eleventh value, the third field is invalid, and the sixth field is valid. For example, a length of the seventh field is one bit. When the value of the seventh field is 0, the third field is valid, and the sixth field is invalid. When the value of the seventh field is 1, the third field is invalid, and the sixth field is valid. For another example, a length of the seventh field is one bit. When the value of the seventh field is 1, the third field is valid, and the sixth field is invalid. When the value of the seventh field is 0, the third field is invalid, and the sixth field is valid. That the third field is valid, and the sixth field is invalid may be understood as that the terminal device ignores the sixth field, and determines, based on the third field, the cell corresponding to the random access procedure triggered by the indication information. That the third field is invalid, and the sixth field is valid may be understood as that the terminal device ignores the third field, and determines, based on the sixth field, the TRP corresponding to the random access procedure triggered by the indication information. Further, the terminal device may further determine, based on a valid field, one or more of the TAG, the identifier of the control channel group, or the path loss measurement resource corresponding to the random access procedure triggered by the indication information.

In another possible implementation, if the network device configures the function of cell switching triggered by lower layer signaling and the function of intra-cell multi-station transmission for the terminal device, the indication information includes the third field. In addition, the indication information may further indicate an index of an SSB, to indicate an SSB corresponding to the random access procedure triggered by the indication information. The terminal device may determine, based on the third field and a TAG associated with the SSB, one or more of the cell, the TRP, the TAG, the identifier of the control channel group, or the path loss measurement resource corresponding to the random access procedure, whether the TRP (or the TAG or the identifier of the control channel group) corresponding to the random access procedure is the same as the TRP (or the TAG or the identifier of the control channel group) corresponding to the indication information, or the like.

For brevity, one or more of the TRP, the TAG, the identifier of the control channel group, or the path loss measurement resource corresponding to the random access procedure, whether the TRP (or the TAG or the identifier of the control channel group) corresponding to the random access procedure is the same as the TRP (or the TAG or the identifier of the control channel group) corresponding to the indication information, or the like are referred to as first information for short hereinafter.

For example, the terminal device may first determine the cell indicated by the third field. Further, if the third field indicates the candidate cell (for example, the value of the third field is the value other than the fifth value), the terminal device may determine that the cell corresponding to the random access procedure triggered by the indication information is the cell indicated by the third field. In this case, the terminal device may not need to determine the first information based on the TAG associated with the SSB. If the third field indicates the first serving cell (for example, the value of the third field is the fifth value), the terminal device may determine that the cell corresponding to the random access procedure triggered by the indication information is the first serving cell, and determine the first information based on the TAG associated with the SSB. For example, if the SSB is associated with the first TAG of the first serving cell, it means that the random access procedure triggered by the indication information corresponds to the first TRP, the first TAG, the identifier of the first control channel group, or the first path loss measurement resource or that the TRP (or the TAG or the identifier of the control channel group) corresponding to the random access procedure is the same as the TRP (or the TAG or the identifier of the control channel group) corresponding to the indication information. For another example, if the SSB is associated with the second TAG of the first serving cell, it means that the random access procedure triggered by the indication information corresponds to the second TRP, the second TAG, the identifier of the second control channel group, or the second path loss measurement resource or that the TRP (or the TAG or the identifier of the control channel group) corresponding to the random access procedure is different from the TRP (or the TAG or the identifier of the control channel group) corresponding to the indication information.

Different fields in the indication information may be respectively for the scenario of the inter-cell multi-station transmission and the scenario of the intra-cell multi-station transmission; or one field (for example, denoted as an eighth field) in the indication information may be for the scenario of the inter-cell multi-station transmission and the scenario of the intra-cell multi-station transmission. **In an implementation,** meanings of the eighth field may be different in the scenario of the inter-cell multi-station transmission and the scenario of the intra-cell multi-station transmission. The terminal device may first determine a current scenario, to determine a manner of understanding the eighth field. For example, if the network device configures the function of inter-cell multi-station transmission for the terminal device, and does not configure the function of intra-cell multi-station transmission for the terminal device, the eighth field may be understood as the fourth field. In other words, a function of the eighth field is the same as a function of the fourth field. In other words, the terminal device may interpret the eighth field in a manner of interpreting the fourth field. For details, refer to the foregoing content. Details are not described again. If the network device configures the function of intra-cell multi-station transmission for the terminal device, and does not configure the function of inter-cell multi-station transmission for the terminal device, the eighth field may be understood as the sixth field. In other words, a function of the eighth field is the same as a function of the sixth field. Correspondingly, the terminal device may interpret the eighth field in a manner of interpreting the sixth field.

**In another implementation,** meanings of the eighth field may alternatively be the same in the scenario of the inter-cell multi-station transmission and the scenario of the intra-cell multi-station transmission. For example, regardless of the scenario of the inter-cell multi-station transmission or the scenario of the intra-cell multi-station transmission, the eighth field indicates the TRP corresponding to the random access procedure triggered by the indication information, indicates whether the TRP corresponding to the random access procedure triggered by the indication information is the same as the TRP corresponding to the indication information, indicates the TAG corresponding to the random access procedure triggered by the indication information, indicates whether the TAG corresponding to the random access procedure triggered by the indication information is the same as the TAG corresponding to the indication information, indicates the identifier that is of the control channel group and that corresponds to the random access procedure triggered by the indication information, indicates whether the identifier that is of the control channel group and that corresponds to the random access procedure triggered by the indication information is the same as the identifier that is of the control channel group and that corresponds to the indication information, or indicates the path loss measurement resource for the random access request message in the random access procedure triggered by the indication information. For a specific implementation process, refer to the foregoing related content of indicating the TRP by the indication information. Details are not described again.

In a possible implementation, if the network device configures a function of multi-station transmission (namely, the function of inter-cell multi-station transmission or the function of intra-cell multi-station transmission) for the terminal device in the serving cell (for example, the first serving cell), the indication information may include the eighth field. That the network device configures the function of multi-station transmission for the terminal device in the serving cell specifically includes: The network device configures third configuration information for the terminal device. In other words, that the network device configures the function of multi-station transmission for the terminal device means: The network device configures the third configuration information for the terminal device. In other words, the network device configures the function of multi-station transmission for the terminal device in the following manner: The network device configures the third configuration information for the terminal device. In other words, that the network device configures the function of multi-station transmission for the terminal device is specifically: The network device configures the third configuration information for the terminal device.

For example, the network device may determine the third configuration information. For example, the CU in the embodiment shown in FIG. 5 determines the third configuration information. Further, the network device may send the third configuration information to the terminal device. For example, the RU in the embodiment shown in FIG. 5 sends the third configuration information to the terminal device. Accordingly, the terminal device receives the third configuration information from the network device. The third configuration information may be carried in RRC signaling. This is not limited.

For example, the third configuration information may include one or more of the following:

information indicating to enable (or turn on, activate, start, or the like) the function of multi-station transmission;
information about two timing advance offset (offset) parameters (for example, values of two offsets), for calculating TA values of two TAGs;
information about two TAGs (for example, identification information of the two TAGs); or
information about two control channel groups (also referred to as two control channel groups), for example, identification information of the two control channel groups.

Correspondingly, that the network device configures the function of multi-station transmission for the terminal device in the serving cell may be replaced with that the network device configures the information about the two TAGs and the information about the two control channel groups for the terminal device in the serving cell; may be replaced with that the network device configures, for the terminal device in the serving cell, the information indicating to enable the function of multi-station transmission; may be replaced with that the network device configures the information about the two timing advance offset parameters for the terminal device in the serving cell; or may be replaced with that the network device configures the information indicating to enable the function of multi-station transmission, the information about the two TAGs, and the information about the two control channel groups for the terminal device in the serving cell. Manners of other replacement are similar, and are not enumerated herein.

In a possible implementation, if the network device configures the function of cell switching triggered by lower layer signaling and the function of multi-station transmission for the terminal device, the indication information includes the third field and the eighth field. For the third field and the eighth field, refer to the foregoing content. Details are not described again. In an implementation, the terminal device may determine, based on values of or the information indicated by the third field and the eighth field, whether the random access procedure triggered by the indication information is for cell switching triggered by lower layer signaling or for the multi-station transmission. **For example,** if the values of the third field and the eighth field are both 0 (in other words, the value of the third field is the fifth value, and the value of the eighth field is the sixth value or the eighth value), the random access procedure triggered by the indication information is for the **multi-station transmission.** Further, the terminal device may determine a specific feature of the random access procedure based on the value 0 of the eighth field. For a meaning of the eighth field, refer to the definition of the eighth field. For example, the terminal device may determine, based on whether the configured multi-station transmission is the inter-cell multi-station transmission or the intra-cell multi-station transmission, a meaning represented by the value 0 of the eighth field. Specifically, if the configured multi-station transmission is the inter-cell multi-station transmission, the value 0 of the eighth field indicates that the cell corresponding to the random access triggered by the indication information is the first serving cell. If the configured multi-station transmission is the intra-cell multi-station transmission, the value 0 of the eighth field indicates that the random access triggered by the indication information corresponds to the 1st TRP (or the 1st TAG, the identifier of the 1st control channel group, the first path loss measurement resource, or the like) of the first serving cell. **For another example,** if the value of the third field is 0, and the value of the eighth field is 1 (in other words, the value of the third field is the fifth value, and the value of the eighth field is the seventh value or the ninth value), the random access procedure triggered by the indication information is for the **multi-station transmission.** Further, the terminal device may determine a specific feature of the random procedure based on the value 1 of the eighth field. For a meaning of the eighth field, refer to the definition of the eighth field. For example, the terminal device may determine, based on whether the configured multi-station transmission is the inter-cell multi-station transmission or the intra-cell multi-station transmission, a meaning represented by the value 1 of the eighth field. Specifically, if the configured multi-station transmission is the inter-cell multi-station transmission, the value 1 of the eighth field indicates that the cell corresponding to the random access triggered by the indication information is the additional cell in the active state. If the configured multi-station transmission is the intra-cell multi-station transmission, the value 1 of the eighth field indicates that the random access triggered by the indication information corresponds to the 2nd TRP (or the 2nd TAG, the 2nd control channel group, the second path loss measurement resource, or the like) of the first serving cell. **For still another example,** if the value of the third field is not 0 (in other words, the value of the third field is the value other than the fifth value), and the value of the eighth field is 0 (in other words, the value of the eighth field is the sixth value or the eighth value), the random access procedure triggered by the indication information is for **cell switching triggered by lower layer signaling,** and it is determined that the cell corresponding to the random access procedure is the candidate cell indicated by the third field. It should be understood that it may be pre-stipulated that a case in which the value of the third field is not 0, and the value of the eighth field is not 0 either cannot occur. In other words, a case in which the value of the third field is the value other than the fifth value, and the value of the eighth field is the seventh value or the ninth value cannot occur.

In another implementation, the terminal device may alternatively determine, based on priorities of the third field and the eighth field, whether the random access procedure triggered by the indication information is for cell switching triggered by lower layer signaling or for the multi-station transmission. **For example,** the priority of the third field is higher than the priority of the eighth field, and the terminal device may first determine the cell indicated by the third field or the value of the third field. Further, if the third field indicates the candidate cell, or the value of the third field is the value other than the fifth value, the terminal device may determine that the random access procedure triggered by the indication information is for **cell switching triggered by lower layer signaling,** and determine that the cell corresponding to the random access procedure is the cell indicated by the third field (in this case, the terminal device may ignore the eighth field). If the third field indicates the first serving cell, or the value of the third field is the fifth value, the terminal device may determine that the random access procedure triggered by the indication information is for the **multi-station transmission.**

For example, when the priority of the third field is higher than the priority of the eighth field, and the third field indicates the first serving cell, or the value of the third field is the fifth value, the terminal device may further determine a specific feature of the random access procedure based on a value of the eighth field. For a meaning of the eighth field, refer to the definition of the eighth field. For example, the terminal device may determine, based on whether the configured multi-station transmission is the inter-cell multi-station transmission or the intra-cell multi-station transmission, a meaning represented by the eighth field. Specifically, if the configured multi-station transmission is the inter-cell multi-station transmission (which means that the eighth field may be interpreted based on the fourth field), the terminal device may determine, based on the value of the eighth field, whether the cell corresponding to the random access triggered by the indication information is the first serving cell or the additional cell in the active state. For a specific implementation process, refer to the foregoing related content. Details are not described again. If the configured multi-station transmission is the intra-cell multi-station transmission (which means that the eighth field may be interpreted based on the sixth field), it is determined, based on the value of the eighth field, that the cell corresponding to the random access triggered by the indication information is the first serving cell. Further, when the configured multi-station transmission is the intra-cell multi-station transmission, the terminal device may further determine, based on the value of the eighth field, whether the random access procedure corresponds to the first TRP (or the first TAG, the first control channel group, the first path loss measurement resource, or the like) or the second TRP (or the first TAG, the first control channel group, the first path loss measurement resource, or the like). For a specific implementation process, refer to the foregoing related content. Details are not described again.

In S61, the terminal device may determine the cell in the first cell set or the second cell set, and then the terminal device initiates the random access procedure to the cell, that is, performs content in S62.

S62: The terminal device sends the random access request message to the network device by using the cell indicated by the indication information.

Accordingly, the network device receives the random access request message from the terminal device by using the cell indicated by the indication information. For example, the RU in the embodiment shown in FIG. 5 receives the random access request message from the terminal device by using the cell indicated by the indication information.

That the terminal device sends the random access request message to the network device by using the cell indicated by the indication information specifically means that the terminal device sends the random access request message to the network device by using a random access parameter (for example, a random access resource) corresponding to the cell indicated by the indication information. In addition, sending the random access request message to the network device by using the cell may alternatively be expressed as initiating a random access request procedure to the cell. It should be noted that a specific implementation of the random access procedure is not limited in this embodiment of this application.

In this embodiment of this application, the indication information indicates the cell in the first cell set, or indicates the cell in the second cell set. In this way, the terminal device can determine the cell to which the random access procedure is to be initiated. In this way, a problem that the terminal device is unaware of whether to initiate the random access procedure to the cell in the first cell set or initiate the random access procedure to the cell in the second cell set can be avoided. Therefore, the function of cell switching triggered by lower layer signaling and the function of inter-cell transmission can be compatible.

In embodiments provided in this application, the method provided in embodiments of this application is separately described from a perspective of interaction between the terminal device and the network device. The steps performed by the terminal device may be implemented by different functional entities that the terminal device consists of. The steps performed by the network device may be implemented by different functional entities that the network device consists of. To implement functions in the method provided in embodiments of this application, the terminal device and the network device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

The following describes, with reference to the accompanying drawings, communication apparatuses for implementing the foregoing method in embodiments of this application. Therefore, all the foregoing content may be used in the following embodiments. Repeated content is not described again.

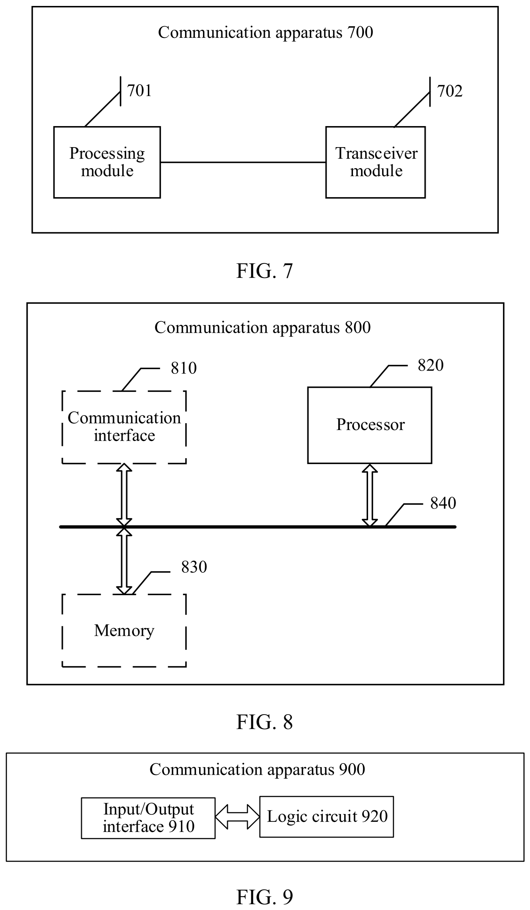

FIG. 7 is a diagram of a structure of a communication apparatus 700. The communication apparatus 700 may implement functions or steps implemented by the terminal device or the network device in the foregoing method embodiments.

In a possible implementation, the communication apparatus 700 may include a processing module 701 and a transceiver module 702. The processing module 701 is configured to perform a processing operation other than receiving and sending operations. For example, the processing module 701 may be configured to perform the processing operation other than the receiving and sending operations of the terminal device or the network device in the embodiment shown in FIG. 6. The transceiver module 702 may also be referred to as a communication interface, a communication unit, or the like, and is configured to receive or send related data, related information, or a related message. For example, the transceiver module 702 is configured to perform the receiving operation and the sending operation of the terminal device or the network device in the embodiment shown in FIG. 6.

In another possible implementation, the communication apparatus 700 may include a transceiver module 702. The transceiver module 702 may also be referred to as a communication interface, a communication unit, or the like, and is configured to receive or send related data, related information, or a related message. For example, the transceiver module 702 is configured to perform the receiving operation and the sending operation of the terminal device or the network device in the embodiment shown in FIG. 6.

It should be noted that the foregoing modules may be independently disposed, or may be partially or completely integrated. For example, the transceiver module 702 may include a sending module and a receiving module.

In an example, the communication apparatus 700 may implement functions or steps implemented by the terminal device in any one of the foregoing method embodiments. The transceiver module 702 is configured to: receive indication information from a network device, and send a random access request message to the network device by using a cell indicated by the indication information. Optionally, the processing module 701 is configured to determine a cell in a first cell set or determine a cell in a second cell set based on the indication information.

In another example, the communication apparatus 700 may implement functions or steps implemented by the network device in any one of the foregoing method embodiments. The transceiver module 702 is configured to: send indication information to a terminal device, and send a random access request message to the network device by using a cell indicated by the indication information.

The indication information indicates a cell in a first cell set, or indicates a cell in a second cell set. For more detailed descriptions, directly refer to the related descriptions in the method embodiment shown in FIG. 6. Details are not described herein again.

FIG. 8 is a diagram of a structure of a communication apparatus 800 according to an embodiment of this application. The communication apparatus 800 may include a processor 820, configured to implement or support the communication apparatus 800 in implementing functions of the terminal device or the network device in any method embodiment of this application. For details, refer to the detailed descriptions in the foregoing method embodiment. Details are not described herein again. For example, the processor 820 is configured to: read program instructions through a communication interface, and execute the program instructions, so that the communication apparatus 800 implements a corresponding method. The processor 820 may include one or more processors. This is not limited.

Specifically, the communication apparatus 800 may be a terminal device or a functional module located in the terminal device, and can implement functions of the terminal device in any method embodiment of this application; or the communication apparatus 800 may be a network device or a functional module located in the network device, and can implement functions of the network device in any method embodiment of this application.

It should be noted that the foregoing functional module may be implemented by hardware, or may be implemented by a combination of the hardware and software. This is not limited.

For example, the communication apparatus 800 may be a chip system. The chip system may consist of a chip, or may include the chip and another discrete component. This is not limited.

Optionally, the communication apparatus 800 may further include a memory 830, configured to store program instructions and/or data. The memory 830 is coupled to the processor 820. Coupling may be understood as an indirect coupling or a communication connection between apparatuses, units, or modules, may be in an electrical, mechanical, or another form, and is for information exchange between the apparatuses, the units, or the modules. The processor 820 may operate in cooperation with the memory 830. The memory 830 may include one or more memories. This is not limited.

Further, the processor 820 is configured to execute the program instructions stored in the memory 830, so that the communication apparatus 800 implements the corresponding method.

The one or more memories in the memory 830 may be included in the processor, or the memory 830 may exist independently, for example, an off-chip memory, and is connected to the processor 820 through a communication bus (represented by a bold line 840 in FIG. 8). The memory 830 and the processor 820 may alternatively be integrated together.

Optionally, the communication apparatus 800 further includes the communication interface 810 (represented by a dashed line in FIG. 8), configured to communicate with another device by using a transmission medium, so that an apparatus in the communication apparatus 800 may communicate with the another device. For example, when the communication apparatus is the terminal device, the another device may be a network device or the like. The processor 820 may receive and send data through the communication interface 810.

The communication interface 810 may be specifically a transceiver. Optionally, in the transceiver, a component configured to implement a receiving function may be referred to as a receiving unit, and a component configured to implement a sending function may be referred to as a sending unit. That is, the transceiver includes the receiving unit and the sending unit. The receiving unit is also referred to as a receiver, a receiver circuit, or the like sometimes. The sending unit is also referred to as a transmitter, a transmitter circuit, or the like sometimes. In hardware implementation, the transceiver may be configured to implement a function of the transceiver module 702, and the transceiver is integrated into the communication apparatus 800 to constitute the communication interface 810.

It should be noted that a specific connection medium between the communication interface 810, the processor 820, and the memory 830 is not limited in this embodiment of this application. In FIG. 8, the memory 830, the processor 820, and the communication interface 810 are connected through the communication bus 840. A manner of connection between other components is merely an example for description, and is not limited thereto. The communication bus 840 may be classified as an address bus, a data bus, a control bus, or the like. For ease of representation, only one bold line is for representation in FIG. 8, but this does not mean that there is only one communication bus or only one type of communication bus.

In this embodiment of this application, the processor 820 may be a general-purpose processor, a digital signal processor, an application-specific integrated circuit, a field programmable gate array or another programmable logic component, a discrete gate or a transistor logic component, or a discrete hardware component. The general-purpose processor may be a microprocessor, any conventional processor, or the like. The method disclosed with reference to embodiments of this application may be performed and completed by hardware in the processor, or may be performed and completed by a combination of the hardware and software in the processor.

In embodiments of this application, the memory 830 may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium for carrying or storing program code in a form of instructions or a data structure and that can be accessed by a computer, a circuit, or any other apparatus that can implement a storage function, and is configured to store the program instructions and/or the data.

Based on a same concept, refer to FIG. 9. An embodiment of this application further provides another communication apparatus 900, including an input/output interface 910 and a logic circuit 920. The input/output interface 910 is configured to: receive code instructions, and transmit the code instructions to the logic circuit 920. The logic circuit 920 is configured to run the code instructions, to perform the method performed by the terminal device or the network device in any one of the foregoing embodiments.

The following describes in detail an operation performed by the communication apparatus used in a terminal device or a network device.

In an optional implementation, the communication apparatus 900 may be used in the terminal device, to perform the method performed by the terminal device, specifically, for example, the method performed by the terminal device in the embodiment shown in FIG. 6. For example, the communication apparatus 900 receives indication information from a network device, and sends a random access request message to the network device by using a cell indicated by the indication information, where the indication information indicates a cell in a first cell set, or indicates a cell in a second cell set.

The communication apparatus 900 provided in this embodiment may be used in the terminal device, to complete the method performed by the terminal device. Therefore, for a technical effect that can be achieved by the communication apparatus 900, refer to the foregoing method embodiment. Details are not described herein again.

In another optional implementation, the communication apparatus 900 may be used in the network device, to perform the method performed by the network device, specifically, for example, the method performed by the network device in the embodiment shown in FIG. 6. For example, the communication apparatus 900 sends indication information to a terminal device, and receives a random access request message from the terminal device by using a cell indicated by the indication information, where the indication information indicates a cell in a first cell set, or indicates a cell in a second cell set.

The communication apparatus 900 provided in this embodiment may be used in the network device, to complete the method performed by the network device. Therefore, for a technical effect that can be achieved by the communication apparatus 900, refer to the foregoing method embodiment. Details are not described herein again.

An embodiment of this application further provides a communication system. The communication system may include one or two of the following: a terminal device or a network device. For the terminal device or the network device, refer to the descriptions in the foregoing method embodiments. Details are not described again.

An embodiment of this application further provides a computer-readable storage medium, including program instructions. When the program instructions are run on a computer, the computer is caused to perform the method or the steps of any communication apparatus (for example, the terminal device or the network device) in the foregoing embodiments.

An embodiment of this application further provides a computer program product, including program instructions. When the program instructions are run on a computer, the computer is caused to perform the method or the steps of any communication apparatus (for example, the terminal device or the network device) in the foregoing embodiments.

An embodiment of this application provides a chip system. The chip system includes a processor, configured to implement functions (for example, perform a corresponding method or step) of the terminal device or the network device in the foregoing method. The chip system may consist of a chip, or may include the chip and another discrete component.

Optionally, the chip system further includes a memory, and the memory is configured to store program instructions, so that the processor reads and executes the program instructions, to implement the corresponding method.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, with reference to the units and algorithm steps in the examples described in embodiments disclosed in this specification, this application can be implemented by electronic hardware or a combination of computer software and the electronic hardware. Whether the functions are performed by hardware or software depends on particular applications and design constraint conditions of the technical solutions. A person skilled in the art may use different methods to implement the functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electrical, mechanical, or another form.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part that contributes, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method comprises:

    receiving downlink control information, wherein the downlink control information is for triggering a random access procedure; and if a network device configures first configuration information and second configuration information for a terminal device, the downlink control information comprises a first field and a second field; and
    determining, based on a combination of the first field and the second field, information corresponding to the random access procedure.

2. A communication method, wherein the method comprises:

    sending downlink control information, wherein the downlink control is for triggering a random access procedure; and if a network device configures first configuration information and second configuration information for a terminal device, the downlink control information comprises a first field and a second field; and
    receiving a random access request message that is in the random access procedure and that is sent by the terminal device.

3. The method according to claim 1 or 2, wherein the first configuration information is for configuring a related parameter of cell switching triggered by lower layer signaling, and the related parameter of cell switching triggered by lower layer signaling comprises a related parameter for random access to at least one candidate cell.

4. The method according to any one of claims 1 to 3, wherein the second configuration information is for configuring a related parameter of multi-station transmission, and the related parameter of the multi-station transmission comprises two timing advance groups and two control channel groups.

5. The method according to any one of claims 1 to 4, wherein the first field indicates, in a first cell set, a cell corresponding to the random access procedure, wherein the first cell set comprises a serving cell and at least one candidate cell.

6. The method according to claim 5, wherein
if a value of the first field is 0, the first field indicates the serving cell; and/or if a value of the first field is not 0, the first field indicates one of the at least one candidate cell.

7. The method according to any one of claims 1 to 6, wherein
if a first condition is satisfied, the second field indicates, in a second cell set, a cell corresponding to the random access procedure, wherein the second cell set comprises a serving cell and at least one additional cell corresponding to the serving cell, and the first condition is that the network device configures at least one additional cell for the terminal device.

8. The method according to claim 7, wherein that the second cell set comprises a serving cell and at least one additional cell corresponding to the serving cell comprises that the second cell set comprises the serving cell and an additional cell that is in an active state and that corresponds to the serving cell.

9. The method according to any one of claims 1 to 6, wherein
if a second condition is satisfied, the second field indicates a path loss measurement resource for the random access request message in the random access procedure, wherein the second condition is that the network device configures no additional cell for the terminal device.

10. The method according to claim 9, wherein
if a value of the second field is 0, the second field indicates a first path loss measurement resource, wherein the first path loss measurement resource is a quasi-colocation QCL resource corresponding to the downlink control information; and/or if a value of the second field is 1, the second field indicates a second path loss measurement resource, wherein the second path loss measurement resource is a synchronization signal/physical broadcast channel block SSB resource indicated by the downlink control information.

11. The method according to any one of claims 1 and 3 to 10, wherein the determining, based on the combination of the first field and the second field, the information corresponding to the random access procedure comprises:

if the value of the first field is not 0, determining, based on the cell indicated by the first field, the cell corresponding to the random access procedure, and ignoring the second field; or
if the value of the first field is 0, determining, based on the value of the second field, the cell corresponding to the random access procedure, or determining, based on the value of the second field, the path loss measurement resource corresponding to the random access procedure.

12. A communication apparatus, wherein the communication apparatus comprises a transceiver module and a processing module, wherein

the transceiver module is configured to receive downlink control information, wherein the downlink control information is for triggering a random access procedure; and if a network device configures first configuration information and second configuration information for a terminal device, the downlink control information comprises a first field and a second field; and
the processing module is configured to determine, based on a combination of the first field and the second field, information corresponding to the random access procedure.

13. A communication apparatus, wherein the communication apparatus comprises a transceiver module, wherein

the transceiver module is configured to send downlink control information, wherein the downlink control information is for triggering a random access procedure; and if a network device configures first configuration information and second configuration information for a terminal device, the downlink control information comprises a first field and a second field; and
the transceiver module is further configured to receive a random access request message that is in the random access procedure and that is sent by the terminal device.

14. The apparatus according to claim 12 or 13, wherein the first configuration information is for configuring a related parameter of cell switching triggered by lower layer signaling, and the related parameter of cell switching triggered by lower layer signaling comprises a related parameter for random access to at least one candidate cell.

15. The apparatus according to any one of claims 12 to 14, wherein the second configuration information is for configuring a related parameter of multi-station transmission, and the related parameter of the multi-station transmission comprises two timing advance groups and two control channel groups.

16. The apparatus according to any one of claims 12 to 15, wherein the first field indicates, in a first cell set, a cell corresponding to the random access procedure, wherein the first cell set comprises a serving cell and at least one candidate cell.

17. The apparatus according to claim 16, wherein
if a value of the first field is 0, the first field indicates the serving cell; and/or if a value of the first field is not 0, the first field indicates one of the at least one candidate cell.

18. The apparatus according to any one of claims 12 to 17, wherein
if a first condition is satisfied, the second field indicates, in a second cell set, a cell corresponding to the random access procedure, wherein the second cell set comprises a serving cell and at least one additional cell corresponding to the serving cell, and the first condition is that the network device configures at least one additional cell for the terminal device.

19. The apparatus according to claim 18, wherein that the second cell set comprises a serving cell and at least one additional cell corresponding to the serving cell comprises that the second cell set comprises the serving cell and an additional cell that is in an active state and that corresponds to the serving cell.

20. The apparatus according to any one of claims 12 to 17, wherein
if a second condition is satisfied, the second field indicates a path loss measurement resource for the random access request message in the random access procedure, wherein the second condition is that the network device configures no additional cell for the terminal device.

21. The apparatus according to claim 20, wherein
if a value of the second field is 0, the second field indicates a first path loss measurement resource, wherein the first path loss measurement resource is a quasi-colocation QCL resource corresponding to the downlink control information; and/or if a value of the second field is 1, the second field indicates a second path loss measurement resource, wherein the second path loss measurement resource is a synchronization signal/physical broadcast channel block SSB resource indicated by the downlink control information.

22. The apparatus according to any one of claims 12 and 14 to 21, wherein when determining, based on the combination of the first field and the second field, the information corresponding to the random access procedure, the processing module is configured to:

if the value of the first field is not 0, determine, based on the cell indicated by the first field, the cell corresponding to the random access procedure, and ignore the second field; or
if the value of the first field is 0, determine, based on the value of the second field, the cell corresponding to the random access procedure, or determine, based on the value of the second field, the path loss measurement resource corresponding to the random access procedure.

23. A communication apparatus, comprising at least one processor and a memory, wherein
the memory is configured to store one or more computer programs or instructions, and the at least one processor is configured to execute the one or more computer programs or instructions stored in the memory, to cause the communication apparatus to perform the method according to any one of claims 1 and 3 to 11 or perform the method according to any one of claims 2 to 10.

24. A chip system, wherein the chip system comprises at least one processor, and the at least one processor is coupled to a memory, and is configured to execute one or more computer programs or instructions in the memory, to implement the method according to any one of claims 1 and 3 to 11, or implement the method according to any one of claims 2 to 10.

25. A communication system, comprising a terminal device and a network device, wherein the terminal device is configured to perform the method according to any one of claims 1 and 3 to 11, and the network device is configured to perform the method according to any one of claims 2 to 10.

26. A computer-readable storage medium, storing a computer program or instructions, wherein the computer program or the instructions are for implementing the method according to any one of claims 1 and 3 to 11 or implementing the method according to any one of claims 2 to 10.

27. A computer program product, comprising a computer program or instructions, wherein when the computer program or the instructions are run on a computer, the method according to any one of claims 1 and 3 to 11 is caused to be implemented, or the method according to any one of claims 2 to 10 is caused to be implemented.

FIG. 1

(1)

(2)

FIG. 2

FIG. 3

(1)

(2)

FIG. 4

RAN node

CU

CU-CP          CU-UP

DU

RU

Terminal

**FIG. 5**

Terminal device

Network device

S61: Indication information (indicating a cell in a first cell set, or indicating a cell in a second cell set)

S62: Send a random access request message by using the cell indicated by the indication information

**FIG. 6**

Communication apparatus 700

701

Processing
module

Transceiver
module

702

FIG. 7

Communication apparatus 800

810

Communication
interface

Processor

820

840

830

Memory

FIG. 8

Communication apparatus 900

Input/Output
interface 910

Logic circuit 920

FIG. 9

## INTERNATIONAL SEARCH REPORT

| International application No. |
| --- |
| **PCT/CN2024/109190** |

| A. | CLASSIFICATION OF SUBJECT MATTER |
| --- | --- |
| | H04W74/08(2024.01)i |

According to International Patent Classification (IPC) or to both national classification and IPC

| B. | FIELDS SEARCHED |
| --- | --- |

Minimum documentation searched (classification system followed by classification symbols)

    IPC:H04W

Documentation searched other than minimum documentation to the extent that such documents are included in the fields searched

Electronic data base consulted during the international search (name of data base and, where practicable, search terms used)

    CNABS; CNTXT; CNKI; VEN; WOTXT; USTXT; EPTXT; 3GPP: 下行控制信息, 随机接入, 配置, 字段, 切换, 重选, 多站, 多点, 多trp, DCI, MSG, random access, configuration, field, switch, select, multi

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | WO 2024026752 A1 (GUANGDONG OPPO MOBILE COMMUNICATIONS CO., LTD.) 08 February 2024 (2024-02-08)<br>description, page 4, paragraph 2-page 19, 2nd-to-last paragraph | 1-27 |
| X | CN 115707021 A (HUAWEI TECHNOLOGIES CO., LTD.) 17 February 2023 (2023-02-17)<br>description, paragraphs [0107]-[0242] | 1-27 |
| X | CN 115942500 A (HUAWEI TECHNOLOGIES CO., LTD.) 07 April 2023 (2023-04-07)<br>description, paragraphs [0004]-[0096] | 1-2, 12-13, 23-27 |
| A | US 2023239671 A1 (INTEL CORP.) 27 July 2023 (2023-07-27)<br>entire document | 1-27 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 October 2024** | **08 November 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/109190**

| Patent document cited in search report | | | Publication date (day/month/year) | Patent family member(s) | | | Publication date (day/month/year) |
|---|---|---|---|---|---|---|---|
| WO | 2024026752 | A1 | 08 February 2024 | None | | | |
| CN | 115707021 | A | 17 February 2023 | WO | 2023011265 | A1 | 09 February 2023 |
| CN | 115942500 | A | 07 April 2023 | WO | 2023016332 | A1 | 16 February 2023 |
| US | 2023239671 | A1 | 27 July 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311019103

- CN 202311442764